# EUROPEAN PATENT SPECIFICATION

(11) **EP 1 681 687 B1**
(45) Date of publication and mention of the grant of the patent: **26.03.2008**
(21) Application number: 05425014.7
(22) Date of filing: 14.01.2005
(51) Int. Cl.: H01F 1/00, H01F 10/00, H01F 7/08, H01F 7/16, F16F 9/00, H01F 10/32

(54) **Magnetic devices usin composite magnetic components**
Magnetische Vorrichtungen unter Verwendung von zusammengesetzten magnetischen Elemente
Dispositifs magnétiques utilisant des éléments magnétiques composés

(43) Date of publication of application: 19.07.2006
(73) Proprietor: C.R.F. SOCIETÀ CONSORTILE PER AZIONI, 10043 Orbassano (Torino) (IT)
(72) Inventor: Perlo, Piero, 10043 Orbassano Torino (IT); Pullini, Daniele, 10043 Orbassano Torino (IT); Martorana, Brunetto, 10043 Orbassano Torino (IT); Zvezdine, Kostantin, 10043 Orbassano Torino (IT)
(74) Representative: Notaro, Giancarlo

(56) References cited:
- DE-A1- 10 202 628
- US-A1- 2003 129 405
- US-A1- 2004 025 949
- US-B1- 6 307 285

## Description

### BACKGROUND OF THE INVENTION

### Field of the invention

The present invention relates to the field of magnetic materials in general and more specifically regards new magnetic devices.

### Prior art

Magnetic materials in general can be classified according to their magnetic susceptibility (*χ=M*/*H*) and relative permeability (*µᵣ=(χ*/*µ₀+1*)) in different categories: ferromagnetic, ferrimagnetic, antiferromagnetic, paramagnetic, diamagnetic, and superconductive materials.

Ferromagnetic materials have a high relative permeability, which amplifies small magnetic fields into large flux densities and renders them suitable for microsensors. Their high saturation magnetization can generate large fluxes, which is useful for making microactuators.

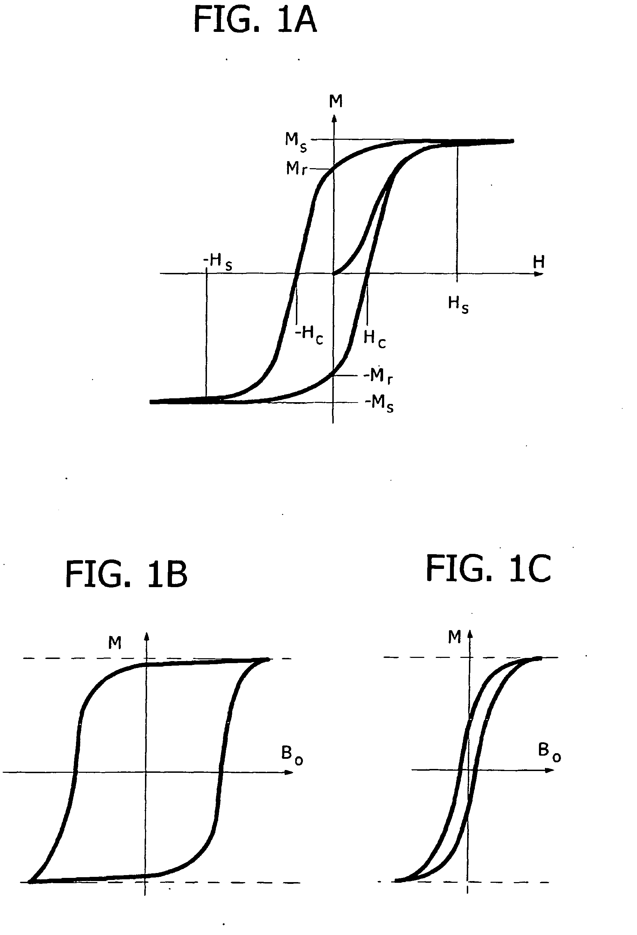

Ferromagnetic materials can be magnetized, demagnetized, and remagnetized. They exhibit a hysteretic behaviour (see Figure 1A of the annexed plate of drawings). Important characteristics that are frequently cited, displayed by the diagrams of the type appearing in Figure 1A, are the saturation magnetization Mₛ, the remanent magnetization Mᵣ, the coercivity H_{c} and the saturation field Hₛ. According to said parameters, ferromagnetic materials can be divided into the so-called "soft" magnetic materials, i.e., ones with low coercivity (having a diagram of the type illustrated in Figure 1C), and "hard" magnetic materials, i.e., ones with high coercivity (having a diagram of the type illustrated in Figure 1B).

The magnetic materials most commonly used in miniaturized devices are the so-called soft ferromagnetic materials, such as NiFe alloys (i.e., permalloy, which typically contains 81% Fe and 19% Ni). The combination of relatively high saturation flux densities, low hysteresis losses and magnetostriction close to zero (i.e., the stresses in the device do not affect its magnetic performance) has meant that these materials are widely used for macroscopic and microscopic sensors and actuators. The production and the construction of magnetic microactuators have in general reproduced those of their macroscopic equivalents.

Even though soft magnetic materials can be used for making high-power actuators and for sensitive magnetometers, hard magnetic materials or permanent magnetic materials would be more appropriate in certain cases. For example, hard magnetic materials with high remanent magnetization Mᵣ can be advantageously used in bidirectional microactuators. In addition, microactuators controlled by coils can be activated with weaker fields and consequently with lower power levels if a hard magnetic material is used instead of a soft magnetic material. It is possible to prepare a wide range of hard magnetic materials by means of metallurgical processes (for example, by sintering, pressure joining, injection moulding, casting, extrusion, and calendering) by means of vacuum processes (for example, evaporation, sputtering, molecular-beam epitaxy or MBE, and chemical vapour deposition or CVD), and by means of electrochemical processes (for example, non-electrical deposition and electrodeposition).

The table below lists typical values of the coercivity and hence of the degree of hardness of some magnetic materials, such as NdFeB and SmCo V and of others, such as alnico V and ferrite.

| **Material** | **Bᵣ** Tesla | **H_{CB}** kA/m | **H_{cj}** kA/m |
|---|---|---|---|
| **NdFeB** | 1.1 | 800 | 1200 |
| **SmCo V** | 0.8 | 640 | 1000 |
| **Alnico V** | 1.2 | 40 | 45 |
| **Ferrite** | 0.38 | 220 | 240 |

Originally, the majority of hard magnetic materials were based upon cobalt alloys, on account of the high crystal anisotropy of said material. So far cobalt-based alloys have been deposited with P, As, Sb, Bi, W, Cr, Mo, Pd, Pt, Ni, Fe, Cu, Mn, O, and H. The elements bound in the cobalt tend to concentrate on the boundaries of the grains. There should result therefrom isolated magnetic cobalt particles, surrounded by non-magnetic and weakly magnetic layers. Said formations create microscopic energy barriers that increase the coercivity H_{c} of the film, thus rendering it magnetically harder.

Ever since 1983, the production of neodymium-ferro-boron (NdFeB) magnets using processes of sintering or of melt spinning has led to their use in many commercial products. NdFeB alloys in the bulk state represent a new promising type of hard magnetic material in so far as they do not contain costly and rare elements, such as cobalt, and enable production of a product of maximum energy of up to 50 Mgauss Oe (0.4 MJ/m³). A nanocomposite structure of NdFeB alloys improves the remanent magnetization Mᵣ, maintaining at the same time high the coercivity H_{c} and renders NdFeB the material for making the most powerful rare-earth magnets amongst the ones available.

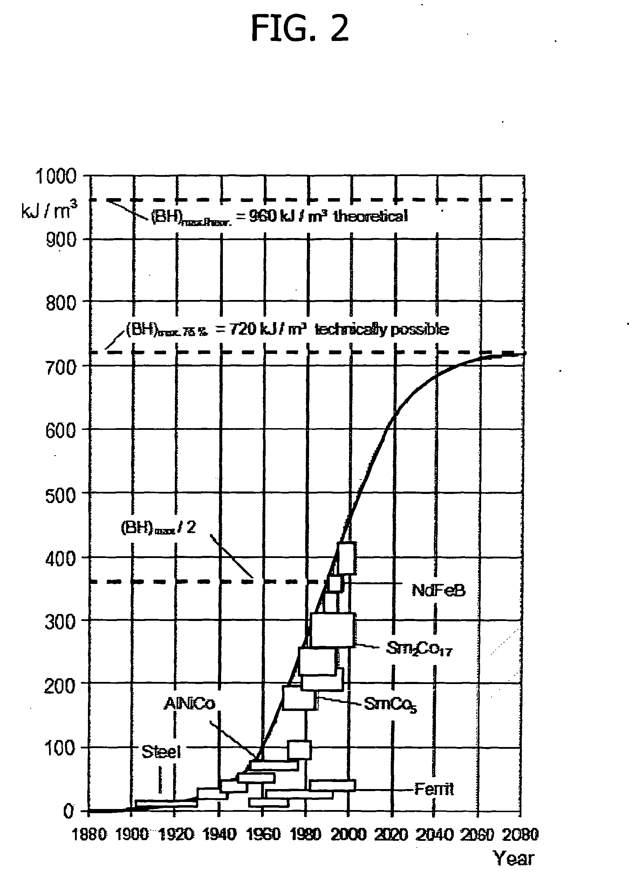

Figure 2 of the annexed plate of drawings shows the development of the magnetic materials.

As third generation of rare-earth-based permanent magnets, NdFeB-based products are less brittle than SmCo and are used in a wide range of applications. NdFeB-based magnets can replace SmCo-based magnets in the majority of cases, especially where the operating temperature is lower than 80°C. The stability in temperature of NdFeB is not as good as that of SmCo-based magnets. The magnetic performance of NdFeB magnets deteriorates rapidly at temperatures above 180°C. As compared to SmCo-based magnets, the resistance to corrosion and to oxidation of NdFeB is relatively low.

Sintered NdFeB-based permanent magnets are obtained via successive steps. First of all, an NdFeB alloy is formulated on the basis of the properties of the final permanent magnets that it is desired to obtain. The alloy is produced in a vacuum oven. The alloy is then pulverized. Sintered NdFeB-based permanent magnets are formed by means of a metallurgical process of treatment of the powders. Said magnets can be formed in a mould or isostatically. During the process of pressing there are applied magnetic fields with the assistance of equipment purposely designed for aligning the magnetic domains and optimizing the magnetic performance of said magnets. The pressed magnets are then put into an oven in a protected atmosphere for sintering. After sintering, the shape of the magnet is rough and requires machining and grinding in order to achieve the desired shape and dimensions. Usually, a cladding surface is applied on NdFeB magnets. Commonly used as protective layer is zinc or nickel. For said purpose, other materials can also be used, such as cadmium chromate, aluminium chromate, tin, or (epoxy) polymers.

The NdFeB alloy magnets are obtained by binding NdFeB powders via fast quenching. The powder is mixed with resin so as to form a magnet by means of compression moulding with epoxy resin or by means of injection moulding with nylon. The latter technique is particularly effective for large-scale production even though the magnetic value of the products is inferior to that obtained with compression moulding on account of their relatively lower density. It is possible to produce various shapes with a high dimensional accuracy without any further treatment. The surface is treated with epoxy coating or nickel plating to prevent corrosion. In order to obtain different magnetic properties, hybrid magnets can be made.

With different ratios of additives to the NdFeB powder, the magnetic properties of hybrid NdFeB magnets can be modulated within a wide range. Once the ratio is fixed, the fluctuation of the magnetic property can still be limited within a narrow range. Some of the properties are presented in the table below.

| P/N | Bᵣ Remanence | | H_{cj} Intrinsic coercivity | | H_{cb} Coercive force | | (BH) max Maximum energy produced | |
|---|---|---|---|---|---|---|---|---|
| | MT | kgauss | kA/m | kOe | kA/m | kOe | kJ/m³ | Mgauss·Oe |
| NB6 | 440-560 | 4.40-5.60 | 560-680 | 7.0-8.5 | 240-320 | 3.0-4.0 | 32-48 | 4.0-6.0 |
| NB8 | 540-640 | 5.40-6.40 | 640-720 | 8.0-9.0 | 320-400 | 4.0-5.0 | 48-64 | 6.0-8.0 |
| NB8M | 540-620 | 5.40-6.20 | 1040-1360 | 13.0-17.0 | 384-464 | 4.8-5.8 | 56-72 | 7.0-9.0 |
| NB10 | 620-700 | 6.20-7.00 | 608-800 | 7.6-10.0 | 360-456 | 4.5-5.7 | 64-80 | 8.0-10.0 |
| NB12 | 690-760 | 6.90-7.60 | 640-840 | 8.0-10.5 | 400-480 | 5.0-6.0 | 80-96 | 10.0-12.0 |

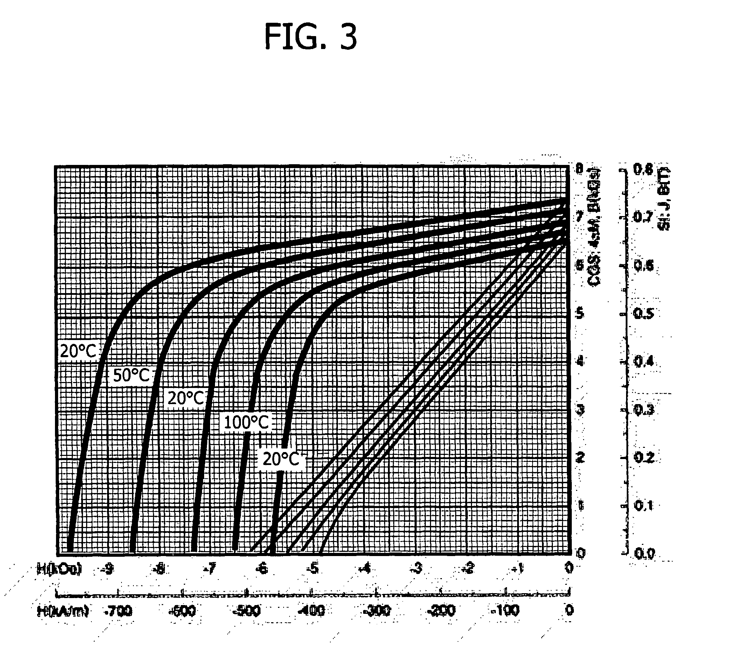

The properties appearing in the table above are typical at room temperature (23°C) for specimens without any cladding. Figure 3 gives an example of a demagnetization curve for an alloy magnet to NB12.

In addition to the class of the multidomain composite magnetic materials, the present patent also regards composites the magnetic characteristics of which, as will be seen, are derived from the collective behaviour of an organized multitude of elementary magnets that can present in the form of single domains, of complex molecules, or more in general of molecular clusters. Since these are of microscopic or nanoscopic dimensions, they present the peculiarity of having a high surface/volume ratio, which is very advantageous in terms of the magnetic characteristics that can generally be defined starting from the distribution of the magnetic domains on the surface.

Document US-B1-6 307 285 discloses a magnetic device according to the preamble of the present claim 1.

### PURPOSES OF THE INVENTION

A first purpose of the present invention is to provide a type of composite magnetic material of a new conception which can be advantageously used for making devices of various kinds, such as spring devices, active damping devices, pumps or compressors, electrically controlled active closing and opening devices, and, more in general, actuators of various types and units for imparting movement on a driven member.

A particular purpose of the invention is to provide a class of magnetic devices, for example in the form of support to magnetic suspensions.

A further purpose of the invention is to provide a class of magnetic actuators.

Yet another purpose of the invention is to provide an articulated and jointed moving system in which every single element made of the composite magnetic material takes part in the overall motion.

Yet a further purpose of the invention is to provide a system of a large number of magnets set in a chamber with elements in motion so as to guarantee fluid tightness and to act as valve, pressure regulator, or pump-compressor.

### THE INVENTION

With a view to achieving the above and further purposes, the subject of the invention is a magnetic device according to claim 1.

In the composite magnetic component used in the magnetic device according to the invention, the magnetic elements are arranged in three-dimensional space in a discrete way and in such a way that the resulting magnetic field produced is the vector superposition of the fields produced by the individual magnetic elements. The resultant field produced by the composite structure of the component used in the magnetic device according to the invention in this way presents, around the poles, a magnetic field the lines of force of which, in contrast with the case of a conventional magnet, can be determined and defined via: the composition and shape of the elementary magnets; the position of the elementary magnets in the matrix; and the peripheral geometry of the composite. In the proximity of the poles, the composite magnet can be designed so as to present magnetic equipotential lines more orthogonal to the direction of magnetization and more parallel to one another as compared to the ones produced by a conventional magnet in the corresponding areas. This results in a magnetic force which is more aligned in the direction of magnetization of the magnet itself. The force of interaction between opposed magnets in the repulsion configuration or attraction configuration proves in this way to be more uniformly distributed over a larger area than what can obtained with a massive bulk material.

Given the same magnetic mass, as compared to a conventional magnet the composite magnet can be designed for the purpose of exerting an attractive/repulsive force which is more uniform and in general according to a pre-set distribution of the intensity of the field in the space of interest. Said behaviour is an effect due to the geometrical distribution of the elementary magnets as well as to their composition and shape.

The distribution of the elementary magnets in the organized composite matrix is such that the lines of force of the field can be controlled as regards their paths and their intensity.

A peculiarity of the present invention is the possibility of defining a *priori* the distribution and intensity of the lines of field via the combined control of the overall geometry of the composite, of the geometry of the elementary magnets, of the distribution or relative spacing or orientation of the elementary magnets, and of the choice of the material that constitutes the elementary magnet, with the elementary magnet that can present in the form of a single-domain or multidomain ferromagnetic particle, of a complex molecule, or, more in general, of a molecular cluster.

The composite magnetic component used in the magnetic device according to the invention can be provided with a cladding along its perimetral wall consisting of a material with a high magnetic permeability designed to confine and concentrate the lines of magnetic flux generated by the magnetic elements inside it or in a desired area of space. Said material with high magnetic permeability can also mask part of the polar surfaces of the body of the magnet.

Said material with high permeability can also be a material with a permeability that is not uniform in space, for example a heterostructure with gradient or with modulation of the magnetic permeability. A material with gradient or with modulation of the permeability can be a variable-stoichiometry alloy. Said element can be integrated with the device so as to enable a full control of the individual lines of magnetic field and of the magnetic equipotential lines throughout three-dimensional space.

Said material with high permeability can be a multilayer made of materials with different physical characteristics. As a particular case, an intermediate layer may be constituted by air.

Composite magnetic materials for example with polymeric or ceramic matrices have already been known for some decades. This type of materials finds extensive use whenever it is possible to accept a reduction in the magnetic properties to the advantage of a lower cost and a lower weight, associated to a great flexibility of the possible shapes. In effect, the final component may, for example, be injection-moulded or hot-press moulded. During the process of forming, the magnetic inclusions are usually magnetized in a pre-defined direction in the composite, via the application of an external magnetic field. The magnetic inclusions, which are usually in the form of a micrometric powder, are mixed in the "paste" with the polymeric or ceramic matrix in such a way that their distribution density per unit volume will be as uniform as possible throughout the composite. The lines of force of the magnetic field of such a composite are similar to those of a bulk material but are characterized by a lower intensity.

The characteristic of the composites used in the magnetic device according to the present invention is the one whereby, through the shape and spatial organization of the elementary magnets defined analytically, it is possible to generate magnetic components that produce fields with lines of force defined beforehand.

The non-magnetic material constituting the body has a specific weight lower than that of the material of the magnetic elements, and is preferably a synthetic material, in particular a polymeric material, even though it is also possible, for example, to use a light non-magnetic metal, e.g., aluminium, copper, gold, etc., but also a dielectric one, a porous one with heterogeneous porosity or orderly porosity, a ceramic one, a composite and elastic one, or, in general, a material chosen on account of peculiar physical properties, such as, for example, thermal and electrical conductivity. The elementary magnetic elements are arranged in a matrix or according to any orderly reticular geometry. The use of a protective layer with high thermal conductivity enables dissipation of heat in the case where the component is subjected to extreme thermal conditions that may limit the characteristics of the elementary magnets.

The composite magnetic material can be characterized also as regards the magnetic properties of the individual constituent elementary magnets (B-H curves); in particular, they can differ in shape and be made of materials with different magnetic properties. The possibility of distributing elementary magnets with different magnetic properties in a regular way constitutes a further degree of freedom for characterizing the magnetic properties of the resulting composite and for rendering the cycles of magnetization and remagnetization faster and more energetically efficient.

The regularity of the magnets can be of the type with a periodic structure or with a structure in which the elementary magnets are arranged in the body of the polymeric matrix according to pre-set analytical functions. In particular, in the case of bistable composites, the elementary magnets (whether soft or hard, whether in the form of nanoparticles or in the form of single-domain or multidomain molecular clusters) will be arranged in the field generated by the coil and uniformly distributed throughout the entire composite, according to spatial co-ordinates and orientation such that the reversal of polarity in the current of the coil will induce simultaneous reversal of polarity in all the elementary magnets of the matrix.

Also the shape of each individual magnetic element in the matrix, as likewise that of the composite magnetic element, can be arbitrary in order to bestow the desired magnetic properties on said elements. In particular, an appropriate shape of the composite material enables orientation of the lines of magnetic field, the lines of the resultant forces, and the equipotential lines, as desired.

The elementary magnet forming the composite can be a single-crystal magnet, single-domain ferromagnetic microparticles or nanoparticles, a molecule or a complex of magnetic molecules, a magnetic molecular cluster, etc.

In the particular case where the magnetic characteristics of the individual elementary magnets are markedly dependent upon the temperature, the material that includes them, whether it is of an organic or inorganic type, will have the function of maintaining the magnetic characteristics unaltered over a wider range of temperatures.

According to a first embodiment, the subject of the invention is also a magnetic device, for example having the function of a spring or shock absorber, comprising a plurality of composite magnetic components of the type indicated above, set on top of one another and slidably mounted within a tubular guide column with their polarities alternately oriented in one direction and in the other, in such a way as to repel one another.

Linear or rotational magnetic suspensions, i.e., of a bearing type, enable a contactless support. They consequently differ substantially from the mechanical suspensions or bearings or from mechanical shock absorbers, which require a shaft and some form of lubrication.

In passive magnetic suspensions, the field is generated by permanent magnets or by constant-field electromagnets. These are very similar to the mechanical ones in so far as they do not require active control for their operation. Generally, the body to be suspended is partially or totally made of ferromagnetic material. The main disadvantage of passive magnetic suspensions is their low rigidity and their low capacity for damping, which is only in part compensated for by the new powerful rare-earth-based permanent magnetic materials such as NdFeB.

Magnetic suspensions, and more in general magnetic devices, present various advantages as compared to hydraulic mechanical ones, such as:
- easier microscale fabrication;
- higher reliability;
- different non-linear characteristics and possibility of modifying them via an appropriate composition of the magnetic composite;
- greater scalability (generalizability) of a design from the microscale to the macroscale, and vice versa.

In the invention, the composite magnetic components described above are used for making a device with functions that are superior to those of the simple conventional magnetic-spring or magnetic-suspension device made with materials of the massive bulk type. The magnetic device according to the invention comprises a plurality of magnetic components including composite magnetic components of the type indicated above, slidably mounted within a longitudinal guide. The slidable magnetic elements can be shaped appropriately so as to run along a rail made on the internal surface of the runner guide. The guide can be a tubular element or a simple wire or rod or a set of runner rods, as will be illustrated in detail in what follows. The magnetic components are alternately formed by permanent magnets typically consisting of hard elementary magnets and by bistable magnetic elements consisting of soft or hard elementary magnets, and coil-type winding means for reversing the polarity of the bistable composite magnetic components for the purpose of controlling the passage of the device between a condition of operation in which the composite magnetic components repel one another (push operation), corresponding to the value of current I > I_{c}, and a condition of operation in which the composite elements attract one another (pull operation), corresponding to a current I = 0 in the coil, where I_{c} is the electric current to be supplied to the winding for reversing the magnetization of the composite core.

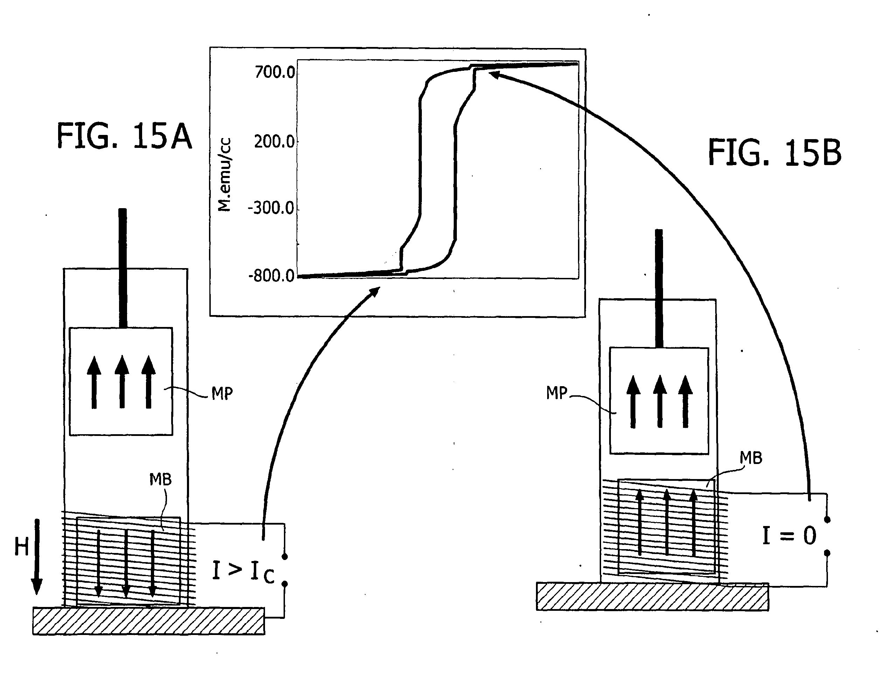

The push-pull system forming the subject of the invention can operate with just two elements as illustrated in Figures 15a and 15b. The first element will consist of a bistable composite, for example made with soft elementary magnets, and the second element will be made with hard elementary magnets.

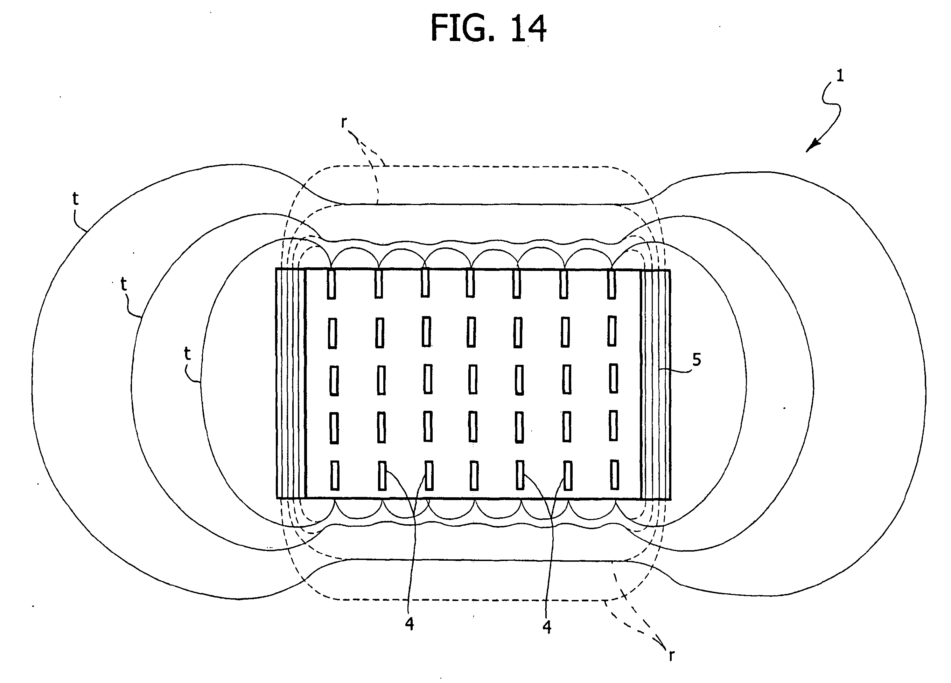

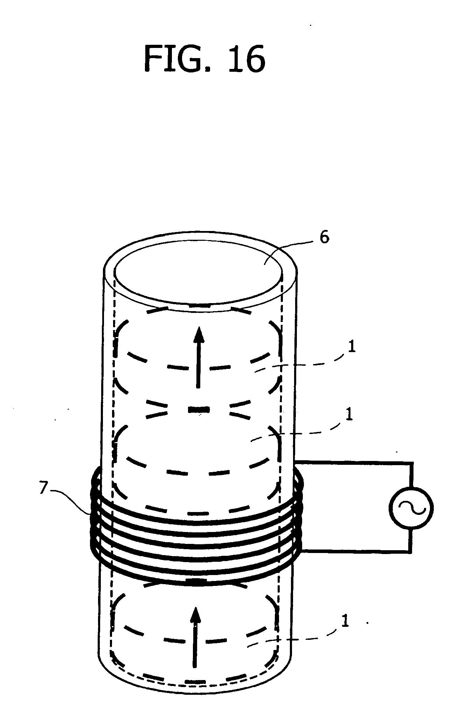

The system forming the subject of the invention, however, preferably consists of a minimum of three magnetic elements interacting as represented in Figures 14, 15, and 16. In a particular configuration illustrated in Figure 16, the bistable component, made, for example, with soft magnets, is perforated or else is of smaller size in order to enable connection of the two composite hard magnets to one another with rods. The bistable magnet is constrained to the structure or else is momentarily clamped via jaws described hereinafter. The polarities of the two hard permanent magnets with high intensity are opposite. In this way, the bistable magnet attracts one of them and repels the other. The reversal of polarity of the bistable composite magnet, preferably with a high remanent magnetization, causes the system of the two hard magnets connected to one another to perform a reciprocating motion downwards or upwards. In the present description and in the ensuing claims, magnetic materials capable of reversing their magnetization following upon application of an external magnetic field are considered as bistable composite magnetic materials. The composite may be obtained with soft or hard elementary magnets or in general with elementary magnets having a pre-set degree of remanent magnetization and, in particular, with magnetic microparticles or nanoparticles or with magnetic-cluster-based complex molecules.

The device described above is an actuator device of a push-pull type, in which a magnetic component is set at the end of the series of magnetic components and is operatively connected to a driven member.

The aforesaid means for reversing the polarity of the bistable magnetic components, for instance of a soft type, are formed by windings, which are arranged around the portions of the tubular guide that are traversed in operation by said magnetic components, or else are arranged along the entire tubular guide, or else are fixedly mounted around the soft magnet within the guide, as will also be illustrated in detail in what follows. In this latter case, the winding is preferably supplied in one of the two following ways: by means of a battery fixed to the winding fixed to the soft magnet or by means of sliding contacts (in which case two electrical paths inside the tubular guide are provided). The battery solution can also include a unit for generation or conversion of energy and a wireless unit for communication with the outside world.

A plurality of independent elements of the bistable-composite type set adjacent to or on top of one another, each equipped with its own winding, can be used to form a single multistage element. The latter, according to the currents applied to the individual windings, may be configured in a multitude of levels of intensity of the field generated in one of the two polarities.

In an alternative embodiment, the non-magnetic part of the composite element mentioned above is made of elastic material and is, consequently, compressible and expandable. Said element possesses within it an element that can expand radially for clamping as required the position of the element itself in a definite position of the cylindrical guide. By appropriately clamping first one and then the other element, or pairs (or any multiplicity) of elements, it is possible to move the entire chain along the tubular guide. All the aforesaid embodiments will be described in detail in what follows.

Each individual element can be clamped by a clamping unit, which is in turn formed by a pair, or by any multiplicity of (soft and hard) magnetic sub-elements, which together form a jaw that can be opened (clamping by expansion) and closed (element free to move) upon command.

As a particular case, one of the elements of the chain may consist of a material of a superconductive type.

The clamping unit can be integrated both in the elements with permanent polarity and in bistable ones and in general in one or more elements of the chain. Also in this case, each sub-element made of bistable magnetic material constituting the clamping unit is equipped with a coil fixed thereto, which is able to magnetize the sub-element to which it is coupled in one direction or in the other. Also in this latter case, the magnetic sub-element can be equipped with a battery for self-supply of the coil, a unit for generating or converting energy, and a wireless port for remote communication.

In a configuration of stepper actuator in the condition of rest the magnets of the jaws are preferably arranged in positions such as repel one another, i.e., in the position of actuator clamped. At the moment of application of the current in the winding, the jaws come closer to one another, releasing the elements of the actuator so that they can move one at a time or simultaneously on the guide.

In a configuration of a spring actuator or of a configuration the shock-absorber/suspension type, the jaws at rest are preferably released, whereas they open for clamping or for slowing down movement of the mobile parts once the polarity of the bistable composite, made, for example, of soft elementary magnets, is reversed.

Between the mobile elements it is possible to insert elastic polymeric spacer elements, or plastic spacer elements, or non-magnetic-metal spacer elements designed to prevent direct contact between the components. In the case where the spacer is elastic, it will also have the function of facilitating passage from the condition in which two components attract one another to the condition in which they repel one another. The energy necessary (i.e., the impulse) for triggering actuation will be in this case lower.

The push-pull system can be fixed on one side.

In a particular embodiment, the push-pull system is used as valve, pressure regulator or compressor.

The mobile elements can in general move within any fluid (even a lubricant).

Further preferred characteristics of the invention are specified in the annexed dependent claims.

### BRIEF DESCRIPTION OF THE PLATE OF DRAWINGS

Figures 1A, 1B and 1C and Figures 2 and 3 illustrate the diagrams corresponding to the magnetic materials which have already been discussed above.
Figure 4 is a schematic plan view of an example of a composite magnetic component used in the magnetic device according to the invention, in which the elementary magnets are arranged according to a pre-set order.
Figure 5 is a partially sectioned perspective view of the magnetic component of Figure 4.
Figures 6, 7, 8, 9, and 10 are perspective views of further embodiments of the magnetic component used in the magnetic device according to the invention, which represent possible variants with respect to the example illustrated in Figure 5.
in particular, Figure 8 illustrates a case where the composite component has curved surfaces and a composite multilayer perimetral cladding with high magnetic permeability, which is used for confining the field in the component.
Figure 9 illustrates the case of a composite in which the elementary magnets are magnetic molecules derived from the salts:
   (tcnq = 7, 7, 8, 8-tetracyanoquinodimethane;
   [Fe₂(η-C₅Me₅) ₂ (µ-SEt) ₂(CO) ₂]₂[tcnq]₂
   tcne = tetracyanoethylene) [Fe₂(η-C₅Me₅) ₂(µ-SEt) ₂(CO) ₂] [tcne].
Figure 10 illustrates the case of a composite in which the elementary magnets are magnetic molecules of the ferrous type.
Figure 11a shows the lines of field generated by a massive bulk magnetic component, whilst Figure 11b shows a magnetic component used in the magnetic device according to the invention in which the lines of field and the resulting forces are defined by the distribution of the elementary magnets, by the perimetral shape, and by the type of elementary magnets used.
Figure 12 is a cross-sectional view of two conventional magnetic elements set adjacent to one another in the repulsion configuration, i.e., with the same polarities facing one another, which shows the lines of the magnetic flux (Figure 12b) and the equipotential lines (Figure 12a) generated thereby.
Figure 13 is a cross-sectional view of two conventional magnetic elements set adjacent to one another in the attraction configuration, i.e., with different polarities facing one another, which shows the lines of the magnetic flux (Figure 13b) and the equipotential lines (Figure 13a) generated thereby.
Figure 14 is a view similar to that of Figure 8, which shows how the lines of magnetic flux are modified in the case where the magnetic component used in the magnetic device according to the invention is provided with an external cladding for containment of the lines of magnetic flux.
Figure 15 is a schematic perspective view which illustrates a first elementary example of application of the invention, designed for example to function as spring-shock absorber-suspension. The system consists of two composite magnetic elements. The bistable element, for example consisting of soft elementary magnets, is fixed on one side, whilst the permanent magnetic element, constituted for example by elementary magnets with high coercivity, is repelled (Figure 15a) or attracted (Figure 15b) according to the current (I) applied to the winding.
Figure 16 is a schematic perspective view illustrating a preferred example of embodiment with three elements, in which the composite magnetic components used in the magnetic device according to the invention are used for making an actuator device that can have various applications.
Figures 17 and 18 are schematic views illustrating the principles of operation of the device of Figure 16.
Figure 19 is a plan view that illustrates an alternative embodiment of the means for guiding the axial movement of the magnetic components illustrated in Figures 15, 16 and 17, according to the invention.
Figure 20 illustrates a further embodiment, in which the components are guided by rods.

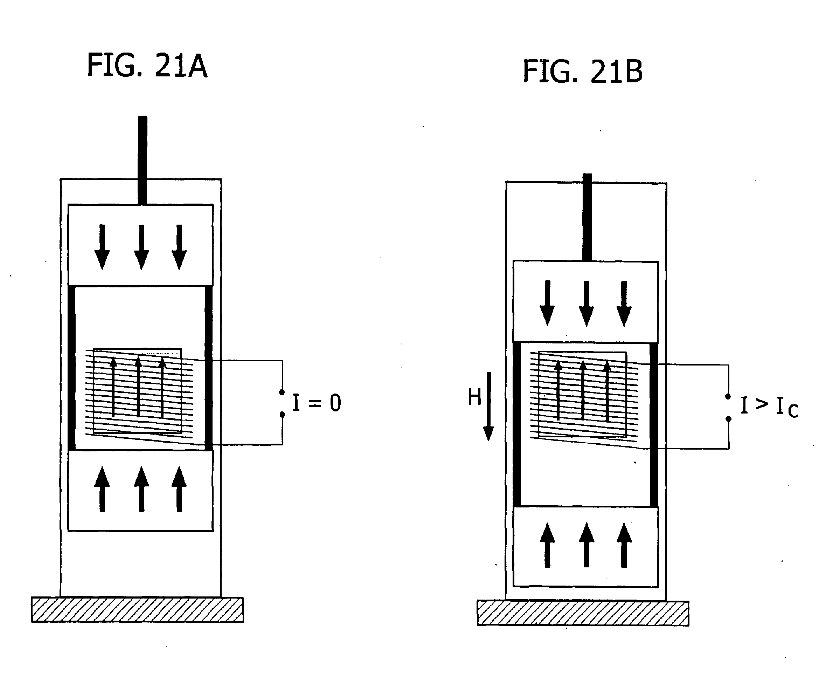

Figures 21a and 21b illustrate a variant of the embodiment with three elements, in which the bistable component is perforated or else is of a smaller size in order to enable the two composites with permanent magnetization to be connected to one another by rods. The bistable magnet, for example consisting of soft elementary magnets, but preferably consisting of elementary magnets with high remanent magnetization, is constrained to the structure or else is momentarily clamped via jaws, as will be illustrated in detail in what follows. The polarities of the two permanent magnets are opposite. In this way, the bistable magnet attracts one permanent magnet and repels the other. Reversal of the polarity of the bistable composite magnet causes the rigid system of the two hard magnets connected to one another to perform a definite movement downwards or upwards. The device can be used as stepper motor, the total stroke of which depends only upon the length of the guide. The particularly advantageous use of this type of actuator is in lifts and elevators, which in this way do not require a number of cables or racks. In the case where the actuator system were to operate at high frequency, the bistable components implemented in the configuration of composite with inclusions of elementary magnets will present the further peculiarity of limiting the dissipation of Foucault currents (eddy currents).
Figures 22 and 23 illustrate two types of supply of the winding of the bistable composite element. In Figure 22 the supply of the winding is provided by a battery supply integrated in the component itself, whilst in Figure 23 the supply of the winding occurs by contact on conductive paths set on the guide.
Figures 24 and 25 illustrate two different conditions of operation of a jaw device used in the device of Figures 22 and 23. In particular, in Figure 24 the clamping mechanism is closed, whereas in Figure 25, with the application of the current to the winding, the clamping mechanism is operative.
Figures 26 and 27 illustrate the two different operating conditions of a clamping and releasing device with two elements, which constitutes a variant to the one illustrated in Figures 24 and 25.
Figures 28 and 29 illustrate the two operating conditions of a clamping mechanism with four elements.
Figure 30 illustrates a further example of embodiment of the multielement invention.
Figures 31a, 31b and 31c illustrate types of embodiment in which either rigid or elastic polymeric non-magnetic separation means or metallic non-magnetic separation means are arranged on the components for preventing their direct contact and facilitating passage between the condition of repulsion and that of attraction.
Figure 32 is a schematic illustration of the various operating steps of a compressor system with flexure valves or valves of an electrical type for controlling intake and pumping of air, gas or liquid.
Figures 33a, 33b and 33c illustrate a multistage component consisting of a plurality of independent bistable composite elements set adjacent to or on top of one another. Each element can be equipped with its own winding. Consequently, the multistage component, according to the currents applied to the windings, may be configured in a multitude of levels of intensity of the resultant generated field in one of the two polarities.
Figures 34a and 34b illustrate an open/close valve for regulating flow of a gas, for instance natural gas, or propane, or hydrogen, or a liquid or gaseous fuel in general.
Figures 35a and 35b illustrate a valve for selection between two fluids.
Figure 36 illustrates a valve for deviating the flow of a fluid.

### DETAILED DESCRIPTION OF SOME EMBODIMENTS

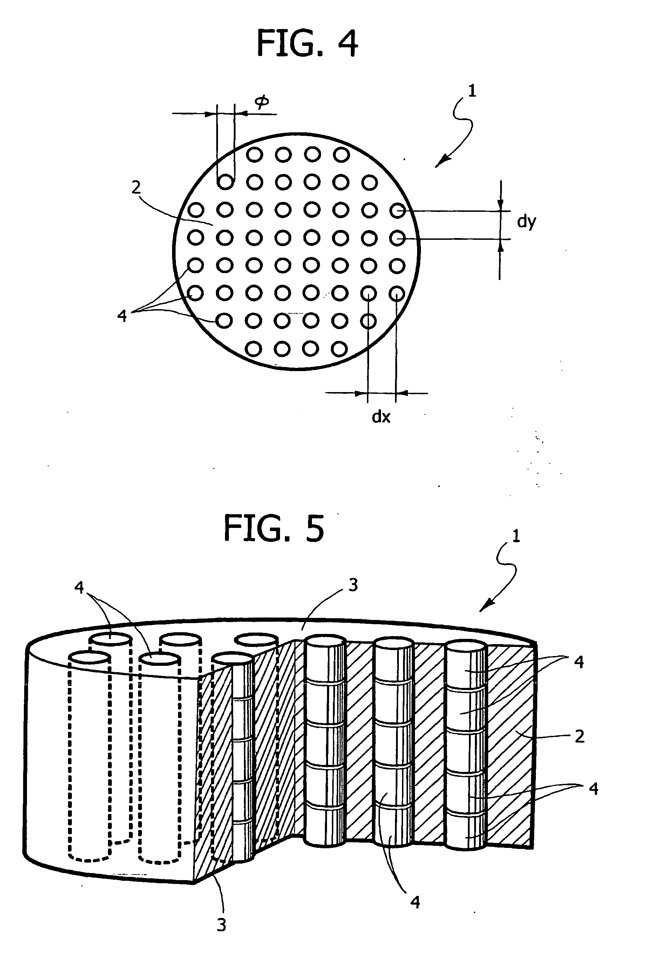

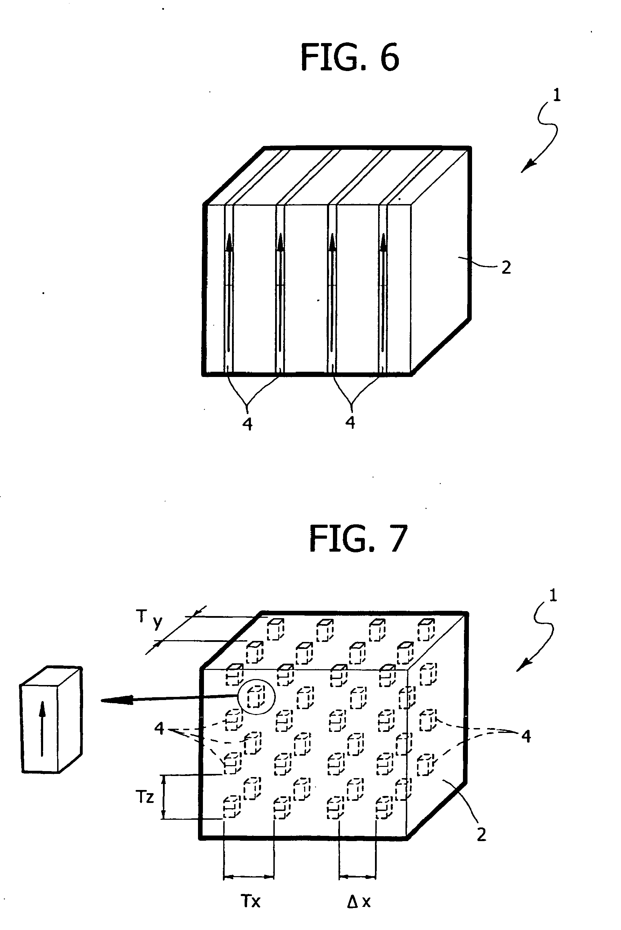

Figures 4 and 5 are a plan view and a partially sectioned perspective view of a first example of embodiment of the composite magnetic component used in the magnetic device according to the invention. The composite magnetic component, designated as a whole by the reference number 1, comprises a body made of non-magnetic material 2 having any desired conformation. The example illustrated in Figures 4 and 5 relates to the case of a cylindrical conformation, in the form of a circular disk, with two main opposite faces 3. Figures 6 and 7 illustrate variants in which the body has a parallellepipedal conformation. The component can in any case assume, as has been said, any other conformation, including, for example, an annular conformation. In the body made of non-magnetic material 2 a number of elementary magnetic elements 4 are englobed, having their N-S polarities all oriented in the same way, in a direction orthogonal to the faces 3. In the example illustrated, each elementary magnetic element 4 has a cylindrical conformation with a circular cross section. In a plan view (Figure 4), the magnetic elements 4 have a diameter ϕ and are arranged in a matrix array with a pitch dx in a first direction and a pitch dy in a second direction orthogonal thereto; the discretization is extended in the direction orthogonal to the plane defined by the first and second directions, with a pitch dz, as further represented in Figure 7.

Also in the case of the individual magnetic elements 4, it is, however, possible to adopt any conformation both as regards their cross section and as regards their general geometry. The dimensional parameters specified above are pre-determined so as to optimize the operating results that will be described in detail in what follows.

The non-magnetic material constituting the disk 2 is preferably a material having a specific weight lower than that of the material constituting the magnetic elements 4. Still more preferably, said material is a synthetic material, for example a polymeric material, or a non-magnetic light metal, for example aluminium, or a dielectric or porous composite material, or again an elastic material.

In the case of the variant of Figure 6, the conformation of the magnetic component 1 is parallelepipedal, to be precise cubic, and the elementary magnetic elements 4 assume the shape of blades or layers englobed in the matrix 2 and each extending throughout the cross section of the body. Figure 7 illustrates once again the case of a parallelepipedal body 2, englobed in which is a matrix arrangement, similar to that of Figure 5, with a number of planes, set on top of one another, of elementary magnetic elements 4 with parallelepipedal conformation.

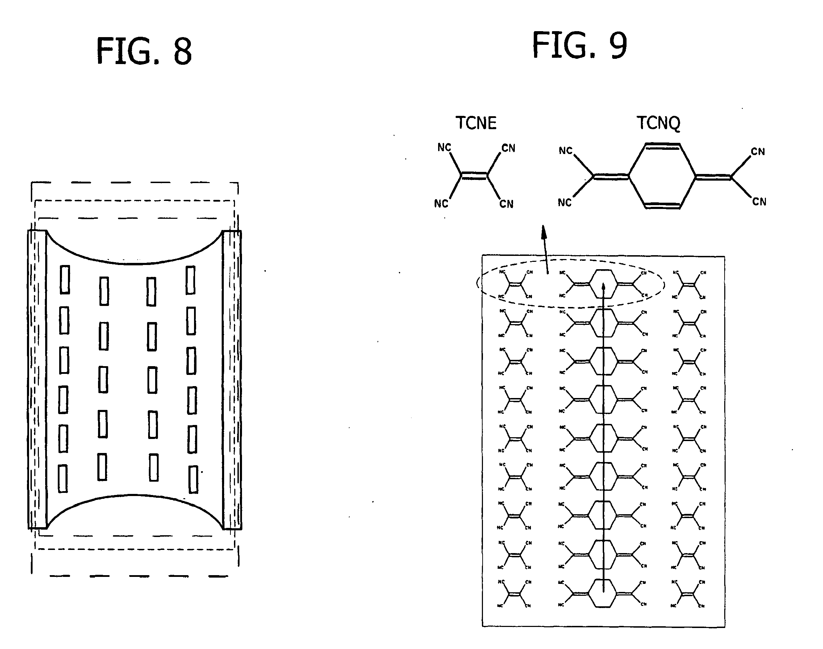

Figure 8 illustrates a composite component in which the spatial organization of the individual elementary magnets in the composite allows the conformation of the lines of field (the equipotential lines are illustrated). These, via the combined use of a composite multilayer perimetral cladding with high magnetic permeability HPC, can moreover be confined in the component itself. This configuration is particularly advantageous when the device is not required to interact with sensors or other surrounding electronic components.

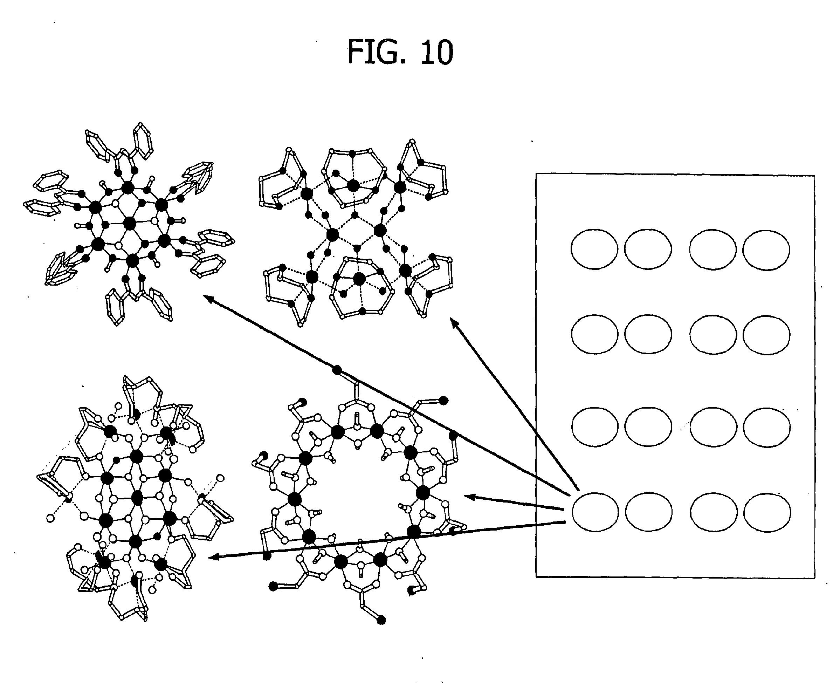

Figure 9 illustrates the case of a composite in which the elementary magnets are magnetic molecules derived from the salts (tcnq = 7, 7, 8, 8-tetracyanoquinodimethane; [Fe₂(η-C₅Me₅)₂(µ-SEt)₂ (CO)₂]₂[tcnq] and derived from the salts tcne = tetracyanoethylene) [Fe₂ (η-C₅Me₅)₂(µ-SEt)₂(CO)₂][tcne], whilst Figure 10 illustrates the case of a composite in which the elementary magnets are magnetic molecules derived from ferracene, manganocene, chromocene, Mn₁₂Ac, V₁₅, Mn₆Rad₆, Fe₈, Fe₁₀, Fe₃₀, etc.

These molecules are complex agglomerates with atomic weights of the order of 10³ atomic units. The properties are due to the presence in the molecule of magnetic ions of Mn, Fe, V, etc. coupled to one another by strong exchange interactions (of the order of 79.6×10³ kA/m (10⁶ Oe)).

More in general, the magnetic device present invention claims the adoption of magnetic composite components wherein the inclusion, according to a spatial order pre-established by an analytical function, of bistable elementary magnets of the high-spin-molecular type (which characterizes their magnetic properties) is provided in organic or inorganic matrices of a polymeric, ceramic, or metallic nature, or of other nature, which also have the function of thermal stabilization of the magnetic characteristics of the elementary magnets.

Magnetic microparticles and nanoparticles, or magnetic molecules of large dimensions, of different size and chemical nature can be combined with polymers or in general be included chemically or physically or mechanically or again via techniques of a microelectronic type in non-magnetic matrices of orderly structure, for example of a photonic-crystal type.

An important peculiarity of single-domain elementary magnets, in the form of microparticles or nanoparticles or complex molecules or molecular clusters, is that of presenting a marked magnetic anisotropy or a high coercivity in one direction, which can be exploited for the fabrication of regular compounds.

Another peculiarity of interest lies in the fact that the magnetic behaviour of an agglomerate of said molecules is the result of the phenomenon of magnetic co-operativity between the individual molecules.

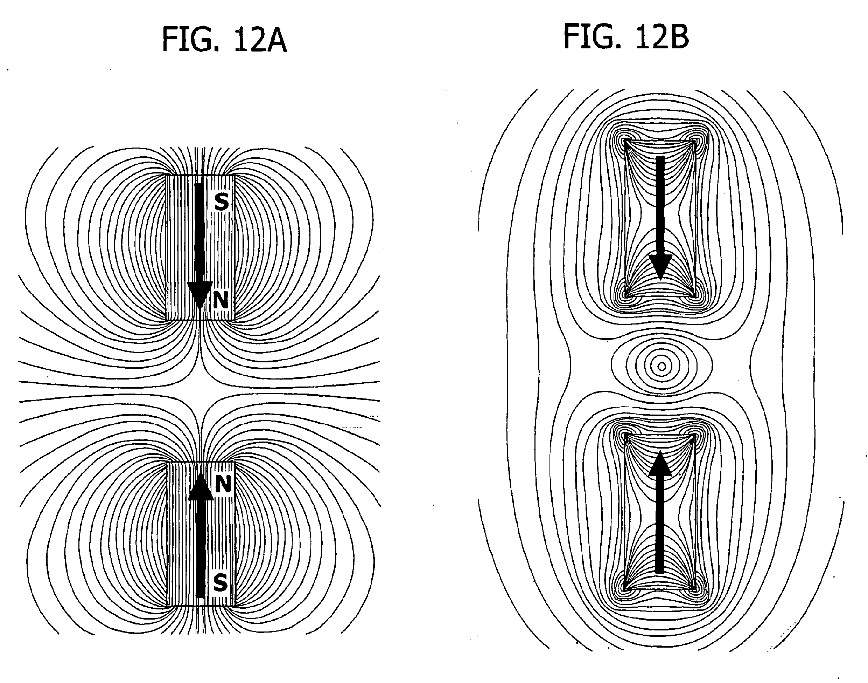

Figure 12 illustrates the condition of two magnetic elements M of a massive bulk type, set one above the other in the repulsion configuration, which have their same polarities set facing one another. The lines S appearing in Figure 12b are magnetic equipotential lines, i.e., lines that join points having the same value of the magnetic field. Since the forces exchanged between the two magnetic elements are locally orthogonal to the equipotential lines S, they appear, as may be seen in Figure 12a, relatively open in a fan-like fashion with respect to the direction of alignment of the two magnetic elements M.

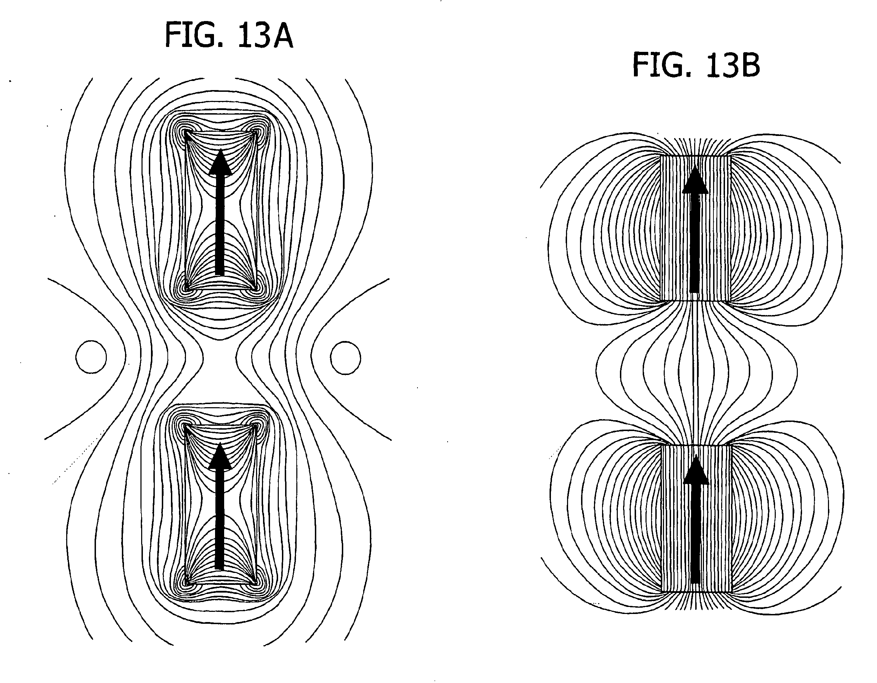

Figure 13 illustrates the condition of two magnetic elements M of a massive bulk type, set one above the other in the configuration of attraction, which have their opposed polarities facing one another. The lines S indicated in Figure 13b are magnetic equipotential lines, i.e., lines that join points having the same value of the magnetic field. The forces exchanged between the two magnetic elements are locally orthogonal to the equipotential lines S. The lines of force of the field coming out of a magnet, as is shown in Figure 13a, partially close on the adjacent magnet.

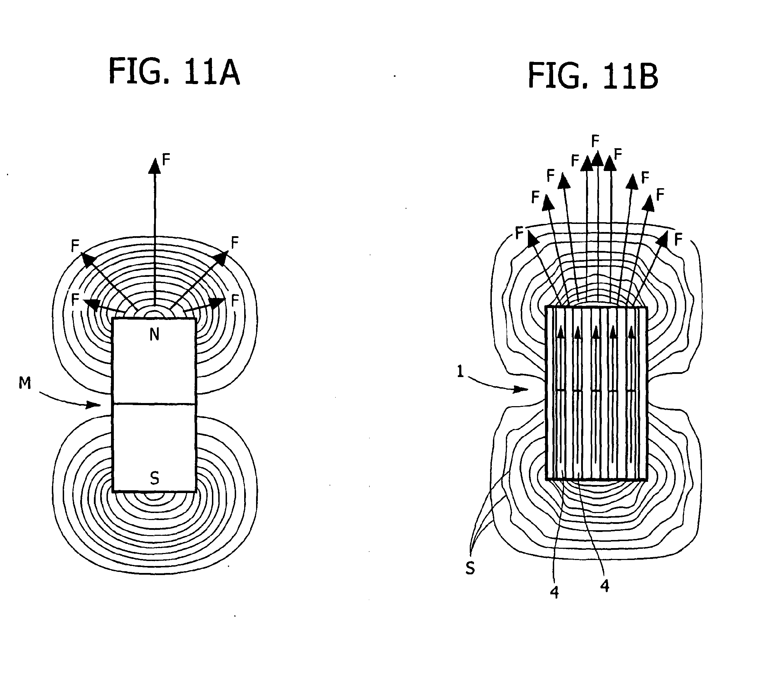

Figure 11a illustrates the lines of flux m of a single conventional massive bulk magnet. Figure 11b illustrates the same situation with a magnetic component used in the magnetic device according to the invention. In this case, then, the magnetic component 1 has a plurality of elementary magnetic elements 4 arranged in a matrix within a body made of non-magnetic material. Following upon the geometrical arrangement of the elementary magnetic elements 4, the resulting global magnetic field has equipotential lines S, which, in the proximity of the poles of the magnetic component 1 are markedly close to being orthogonal to the direction of magnetization. Consequently, the forces F that the magnetic component 1 can exchange with a second similar component facing it are more oriented in the direction of magnetization of the components themselves.

Said phenomenon may be noted even more clearly in Figure 14, which shows the geometrical arrangement of the magnetic elements 4 seen in a cross-sectional plane orthogonal to the opposite faces of the composite magnetic component. Figure 14 shows the lines of flux t of the global magnetic field generated by the sum of the magnetic fields of the multitude of elementary magnets 4. The resulting magnetic field produced is the vector superposition of the fields produced by the individual elementary magnets. As may be seen, thanks to the geometrical arrangement of the magnetic elements, the resulting magnetic field is more uniform and directed, in the proximity of the poles, along the axis of magnetization. Once again in the proximity of the poles, the magnetic equipotential lines are more orthogonal to the direction of magnetization and more parallel to one another as compared to the ones produced by a conventional magnet in the corresponding areas.

Consequently, the composite magnetic component used in the magnetic device according to the invention is not only lighter than a traditional magnetic element given the same volume, but also and above all gives rise to a magnetic effect which is much more effective for the purposes of the uses that will be described in detail in what follows. As compared to a conventional magnet, the composite magnet exerts a more controlled attractive/repulsive force in a specified direction of magnetization. Said behaviour, as has been seen, is an effect due to the type of the elementary magnets and to their geometrical distribution in the component itself.

The composite magnetic component used in the magnetic device according to the invention can be provided with a cladding 5 along its perimetral wall, consisting of a material with a high magnetic permeability, which tends to confine inside it the lines of magnetic flux generated by the magnetic elements 4. In this way, with reference to Figure 14, the lines of magnetic flux of the component, generated by the sum of the individual magnetic elements 4, become the ones designated by r in Figure 14, instead of the lines t already described above.

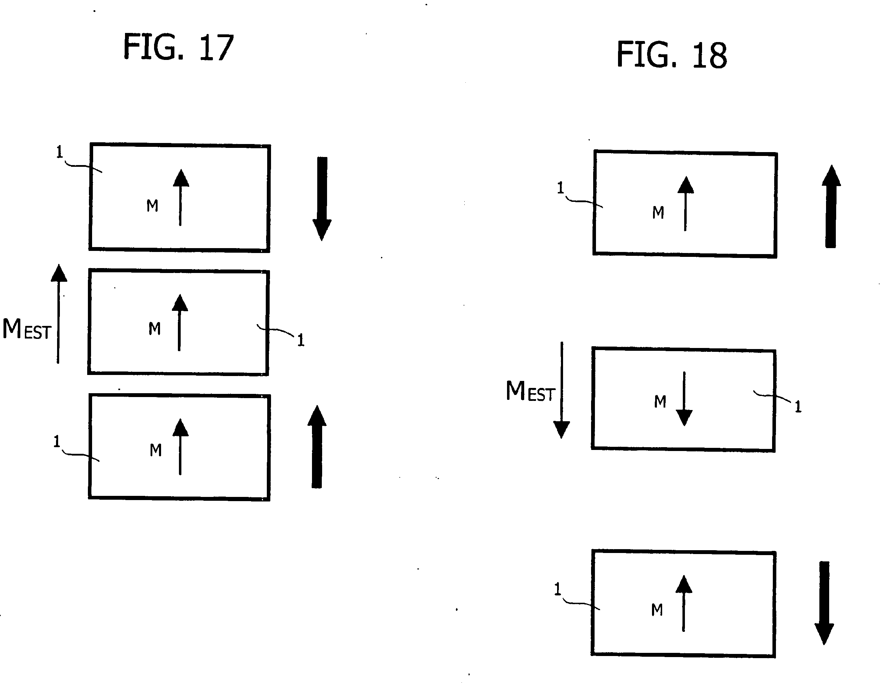

In a first simplified example of use of composite magnetic components made according to the present invention, a magnetic device may be envisaged, which functions as a spring or active shock absorber with a minimum of two elements (Figure 15) or with a higher number of elements (Figure 16). Provided in said device is a plurality of magnetic components 1 according to the invention, set on top of one another and oriented so as to present alternately their polarities reversed (see the arrows in Figures 17 and 18). The various magnetic components 1 are slidably mounted within a guide 6. The magnetic component 1, set at one end of the row, can be operatively connected to a fixed member, whilst the magnetic component 1 set at the opposite end can be connected to a member that is able to move in the direction of the axis of the device in order to achieve an effect of elastic and/or damping suspension of said element.

It should be noted that, in general, the production of suspension or damping devices, with magnetic elements set on top of one another, is in itself known for example from the patent No. US-6 147 422. Not known, instead, are devices of this type which use magnetic elements that assume the form of the composite magnetic component according to the invention. The use of a component of this type affords a wide range of advantages. Above all, the adoption of a composite structure enables a reduction in the weight of the component and, at the same time, the best characteristics of operation thanks to an appropriate choice of the optimal dimensions of the magnetic elements englobed in the body of the non-magnetic material and of the distance between said elements in the two directions of the matrix.

In the case of the present invention, the organized discretization of the elementary magnets in the form of microparticles and nanoparticles and in particular of magnetic molecular clusters enables the use of a bistable component for which it is possible to reverse the polarity with a low level of electric power applied to the winding means, whilst maintaining an intense total magnetic field for both conditions of polarity.

A further important characteristic lies in the fact that, thanks to the organized arrangement of the magnetic elements 4, a better control of the lines of magnetic flux is rendered possible, with a consequent increase in the efficiency of the device, as has been illustrated above with reference to Figures 11, 12, 13, and 14.

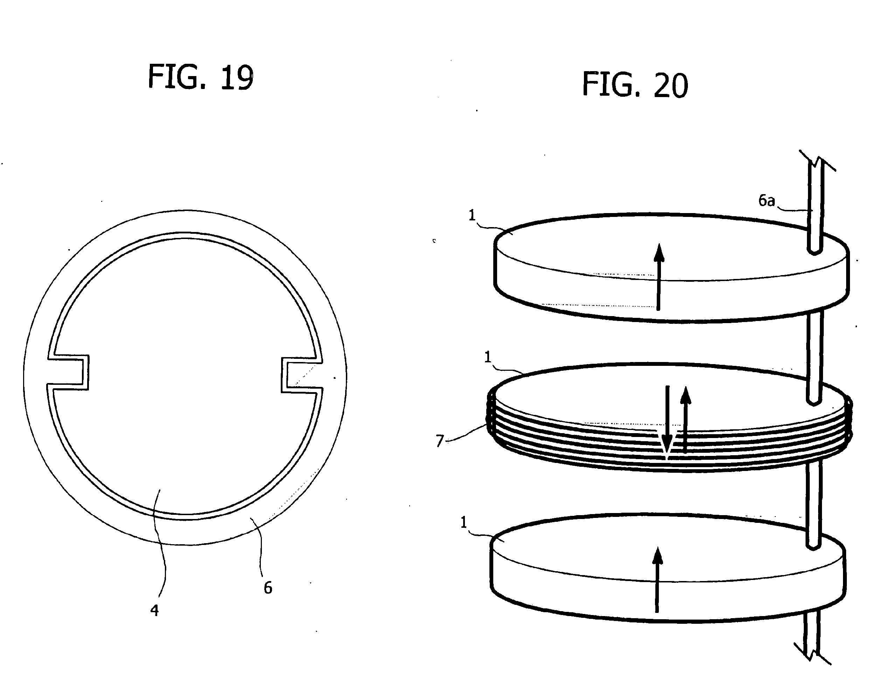

A further advantage of the use of the structure described above for each magnetic component of the device lies in the fact that the force of repulsion between each component and the adjacent one is a function of the degree of alignment between the magnetic elements of the two components, said force being maximum when the magnetic elements of each component are perfectly aligned with the magnetic elements of the adjacent component. For this purpose, Figure 19 illustrates a configuration in which the magnetic components are forced to move according to paths defined for example by a tubular guide designated by 6 and shaped in such a way as not to enable any rotation or translation of the components. The tubular guide designated by 6 can also be replaced for example by a simple wire or rod 6a (Figure 20) or by a set of runner rods.

The invention provides a magnetic actuator device of the active push-pull type, an example of embodiment of which is illustrated in what follows with reference to Figures 15, 16 and 17. An important difference with respect to the case of a simple passive spring or shock-absorber device lies in the fact that at least one component is equipped with windings that enable bistability, i.e., control of the state of magnetization and hence of the polarity.

The magnetic components 1 set on top of one another in the device are alternately permanent magnets MP and bistable magnets MB, where the latter are equipped with elementary magnets 4 made of hard or soft magnetic material, according to the meaning that has been defined above. In the case of Figures 16, 17 and 18, the two magnetic components at the ends of the device, where the arrows indicate that their polarities are oriented upwards, have permanent magnetic elements of high intensity made of massive or bulk material or in general are formed by composites the elementary magnets of which have a high coercivity. The magnetic component 1 that is, instead, in an intermediate position englobes magnetic elements that are, instead, formed by elementary magnets, the polarities of which can be easily reversed by a magnetic field generated for example by windings. The elementary magnets preferably have a high remanent magnetization, but, according to the application, may also be made of soft magnetic material.

Furthermore, as may be seen from Figures 15 and 16, a winding 7 is provided around the portion of the tubular guide 6 that is traversed by the central component 1. The winding 7 is supplied with electric current alternately in one direction and in the other to enable successive reversal of the polarity of the bistable magnetic component MB, for example having soft elementary magnets. The electric current can also be supplied or modulated via PWM and PDM so as to produce effective fields and consequently effective mechanical forces. By reversing the polarity of the bistable component, it is thus possible to pass from a condition in which the components of the device of Figures 15 and 16 attract one another (see Figure 15b and Figure 17, where the arrows M indicate the direction of polarization, and the arrows F indicate attraction forces) to a condition in which the components repel one another (Figures 15a and 18). Consequently, if for instance the component 1 that is at the base of the column is kept clamped, the component 1 that is at the opposite end of the column is alternately pulled (Figures 15b and 17) and pushed (Figures 15a and 18). If the component located in a higher position is connected to a driven member, it is thus possible to obtain accordingly a reciprocating movement of said member with a push-pull effect, following upon the successive reversal in polarity of the bistable component.

Also in this case, the effect is maximum in the case where the magnetic elements of the composite magnetic components are aligned to one another as previously illustrated in Figures 19 and 20. In addition, the number of magnetic components can be any whatsoever. It is on the other hand possible to envisage a guide column in the form of a tube having a non-rectilinear development, in which case the magnetic components arranged within the tube can may have a curved configuration, to adapt to the bends of the guide tube.

Figures 21a and 21b illustrate a variant embodiment with three elements, in which the bistable component is perforated or else has a smaller size in order to enable the two composites with permanent magnetization to be connected to one another with rods. The bistable magnet, for example consisting of soft elementary magnets, but preferably consisting of elementary magnets with high remanent magnetization, is constrained to the structure or else is momentarily clamped via jaws. The polarities of the two permanent magnets are opposite. In his way, the bistable magnet attracts one permanent magnet and repels the other. The reversal of the polarities of the bistable composite magnets causes the rigid system of the two permanent magnets connected to one another to perform a reciprocating motion downwards or upwards. This configuration of a push-pull system is particularly efficient in so far as the permanent magnets act not only in the same direction but also in the same sense.

In the embodiment illustrated in Figures 21a and 21b, the composite magnets can also be formed by a succession of a multiplicity (at least two) of ferromagnetic or antiferromagnetic (FeMn, IrMn) layers coupled by means of layer-layer interaction of exchange. In said composites, a first layer with high coercivity and low saturation magnetization (e.g., SmCo, Co, NiₓFeₓCoₓ alloys, etc.) forces the magnetization of a second adjacent layer with low coercivity and high saturation (e.g., Fe, NiₓFeₓ alloys, etc.) in a desired direction. The composite material thus obtained has a high product of energy (for square cycles of hysteresis, this is defined as the product of the coercive field and the saturation magnetization), which means a high saturation and at the same time a high coercivity.

The embodiment represented in Figure 21 can have both conventional magnets (bulk massive ones) and composite magnetic components, one or more of the latter possibly being of the type referred to above with interacting layers.

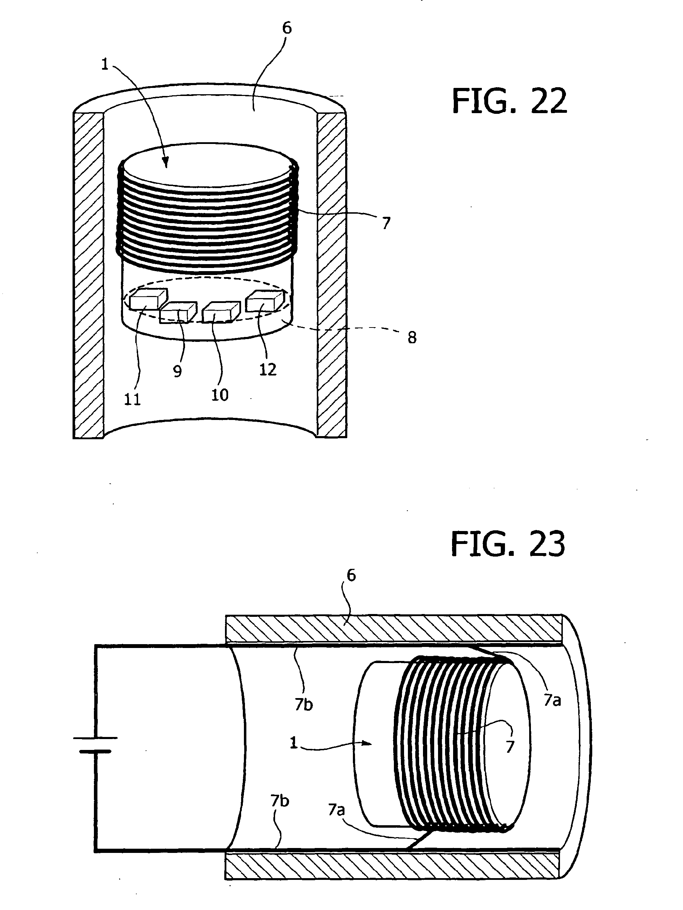

The means for obtaining reversal of the bistable magnetic components can be formed by windings, which are arranged around the portions of the tubular guide and are traversed in operation by the bistable magnetic components, as already illustrated above, or else by windings arranged along the entire tubular guide. An alternative embodiment is one which envisages prearranging a winding around each bistable magnetic component within the tubular guide (Figures 22 and 23). In the example of Figure 22, the winding 7 is supplied by means of a battery 8 rigidly connected to the body of the component 1. In this case, there are also preferably envisaged: a unit for energy generation or conversion 9, designed for example to generate energy starting from the vibrations of the component; a supply device 10; an electronic control unit 11; and a wireless-communication unit 12. Alternatively, as illustrated in Figure 23, the winding can be provided with sliding contacts 7a, which co-operate with electrical-supply paths 7b arranged longitudinally within the tubular guide 6.

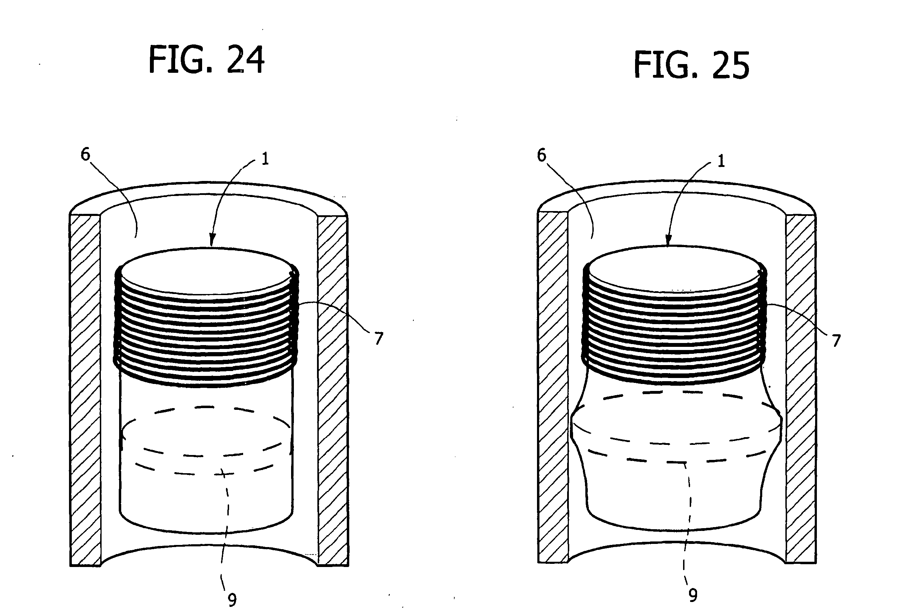

Figures 24 and 25 illustrate an alternative embodiment, in which the non-magnetic body of each composite magnetic component 1 consists of elastically deformable material and in particular a material that can be dilated from the undeformed condition illustrated in Figure 24 to the enlarged condition illustrated in Figure 25. The enlargement can be determined by means of an internal actuator element 9, which can be brought from a condition of rest (Figures 24, 26 and 28) to an enlarged operating condition (Figures 25, 27 and 29).

In the dilated condition of the body of the magnetic component 1, illustrated in Figure 25, said body is pressed against the internal surface of the guide 6 and is consequently blocked in position by friction along the guide 6.

Thanks to the solution illustrated in Figures 24 and 25, it is consequently possible to provide one or more magnetic components in such a way that they can be clamped at any desired instant along the guide. Said functionality enables new possibilities for exploiting the device according to the invention, as will be described in detail in what follows.

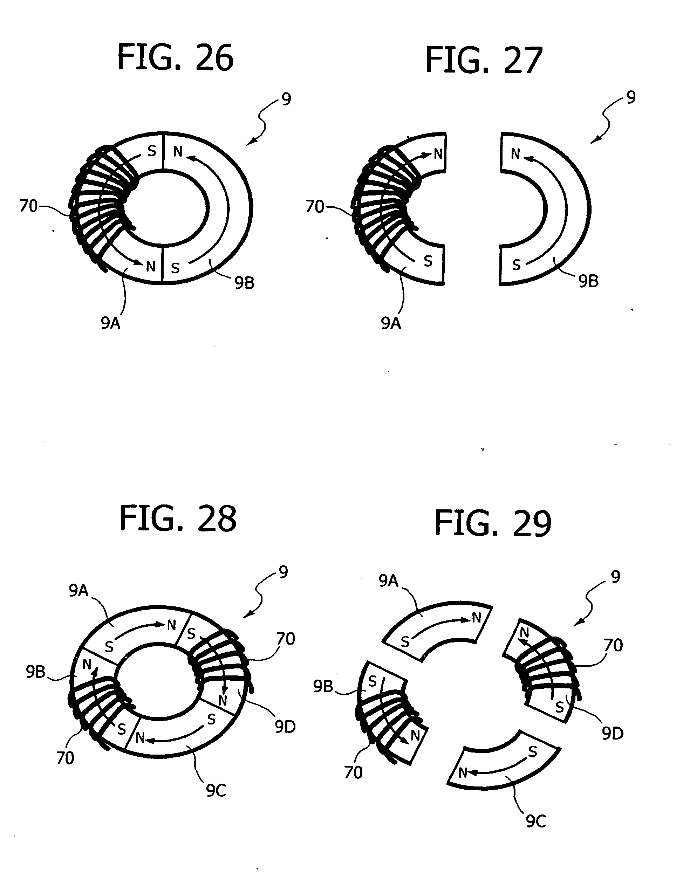

Figures 26 and 27 illustrate a first example of embodiment of the internal actuator element 9 designed to cause expansion of the body of the composite magnetic component 1 illustrated in Figures 24 and 25. In this case, an actuator member 9 in the form of a jaw is provided, having a substantially annular conformation formed by two sectors 9A, 9B, each of which is, in turn, a magnetic element with a direction of magnetization in its circumferential direction. Associated to one of the two sectors, 9A, is an element 70. Said sector is made of bistable magnetic material so that, if the winding 70 is supplied with a current alternately in one direction and in the other, it is possible to reverse the magnetization of said element so as to cause alternately attraction or repulsion thereof with respect to the other sector 9B. In the condition of attraction, the member 9 assumes its configuration of minimum encumbrance, corresponding to the resting condition illustrated in Figure 24, whereas, in the condition of repulsion, the member 9 assumes the enlarged configuration corresponding to that of Figure 25. Also in the case of the solution illustrated in Figures 26 and 27, a battery supply can be associated to the winding 70, together with a unit for generating or converting energy and a wireless port for communication and remote actuation.

Figures 28 and 29 illustrate a variant of the solution of Figures 26 and 27, where the member 9 consists of four sectors, two of which, set diametrally opposite to one another, are provided with a winding 70, which can be supplied for generating a condition of repulsion that brings the member 9 from the condition of rest illustrated in Figure 24 to the expanded operating condition illustrated in Figure 25.

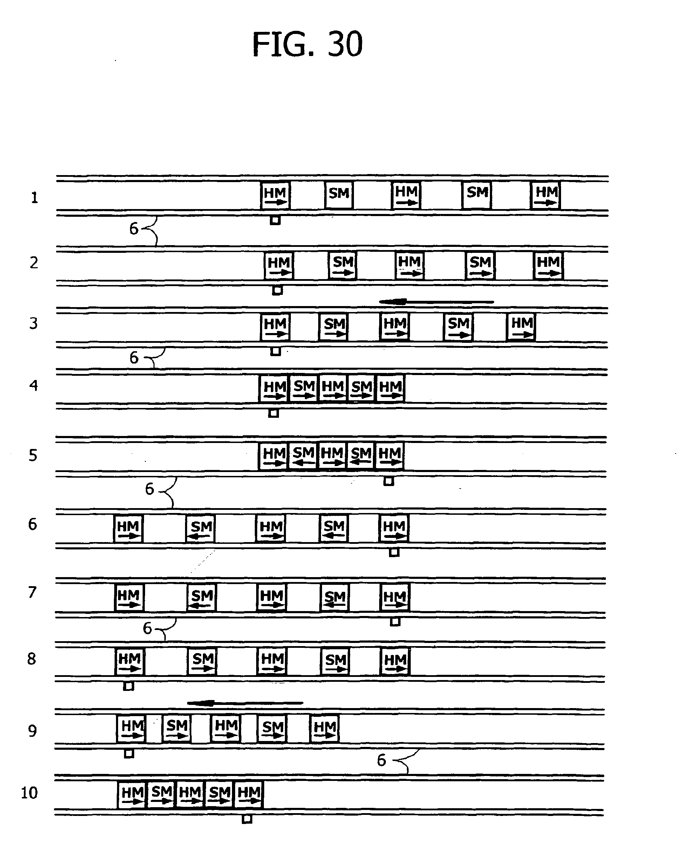

The actuation of the embodiment illustrated in Figures 24 and 25 or of any other solution designed to enable clamping in position of a magnetic component along the guide enables a movement by successive steps to be performed without any limits in the distance travelled or enables in general a worm-like movement of a series of magnetic components along a flexible or rigid guide, for example a tubular guide, as illustrated in Figure 30. In said figure, the sections 1-10 illustrate ten successive operating steps of a system comprising a guide 6, set along which is a row of magnetic components according to the invention, alternately designated by HM (hard magnets or permanent magnets) and SM (bistable magnets, for example having elementary soft magnets). In other words, according to the solution of Figure 16, there is provided a series of magnetic components according to the invention, which are alternately equipped with high-intensity permanent magnetic elements and with bistable elements, preferably formed by elementary magnets with a high remanent magnetization. In the case of the solution illustrated in Figure 30, each bistable magnetic component is of the type illustrated in Figures 22 and 23, i.e., equipped with a winding 7 of its own that controls magnetization. In addition, the permanent magnetic components are each pre-arranged according to the embodiment illustrated in Figures 24 and 25 (except as regards the absence of the winding 7) in such a way that each of said components can be clamped on the guide. In the drawings of Figure 30, the horizontal arrows associated to each magnetic component indicate the direction of magnetization thereof, whilst the clamped condition of a magnetic component on the guide has been indicated symbolically by a small square in a position corresponding to the clamped component. Said representation is purely symbolical, since clamping is obtained, as has been said, in the way illustrated in Figures 24 and 25. As may be seen, in the condition 30(1) the magnetic component furthest to the left is in a clamped condition. All the permanent magnetic components are permanently magnetized with a direction of magnetization oriented towards the right, as viewed in the figure. In the condition 30(1), the two bistable magnetic components are in a neutral condition, since their windings are not supplied. The condition 30(2) describes a subsequent step in which the bistable magnetic components are magnetized with a direction of magnetization identical to that of the permanent magnetic components. As a result of said magnetization, a force of attraction is created between all the magnetic components, which leads the latter to pack against the magnetic component set at the left-hand end, which is clamped in position (Figure 30(4)). At this point, the magnetic component at the left-hand end is released, and the magnetic component at the right-hand end is clamped (Figure 30(5)). In the subsequent step 30(6), the magnetization of the bistable magnetic components is reversed (arrow pointing to the left) so that the magnetic components repel one another, this bringing about advance towards the left, as viewed in the figure, of all the magnetic components, except the one on the extreme right, which is clamped (Figure 30(7)). Once said condition has been reached, the magnetic component on the extreme right is released, and the component on the extreme left is clamped, after which the magnetization of the bistable magnetic components is reversed so as to bring about a movement of attraction that causes packing of all the magnetic components against the clamped magnetic component, on the extreme left (Figures 30(9) and 30(10)). Once said condition has been reached, the element on the extreme left is released, and the element on the extreme right is clamped, and the cycle is repeated, so obtaining a stepwise advance of the series of magnetic components towards the left, as viewed in the drawing.

Thanks to the aforesaid arrangement, it is consequently possible to obtain movement of any driven member along a guide, which of course may even be non-rectilinear.

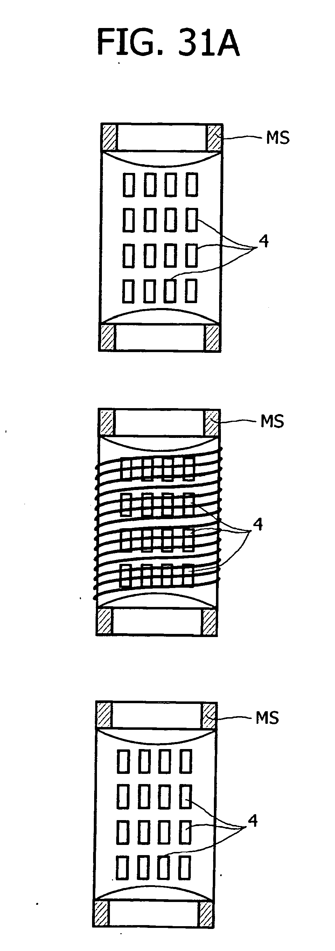

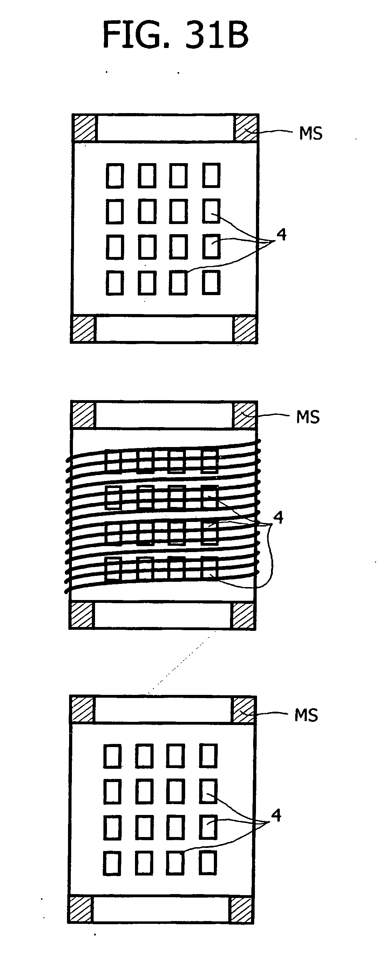

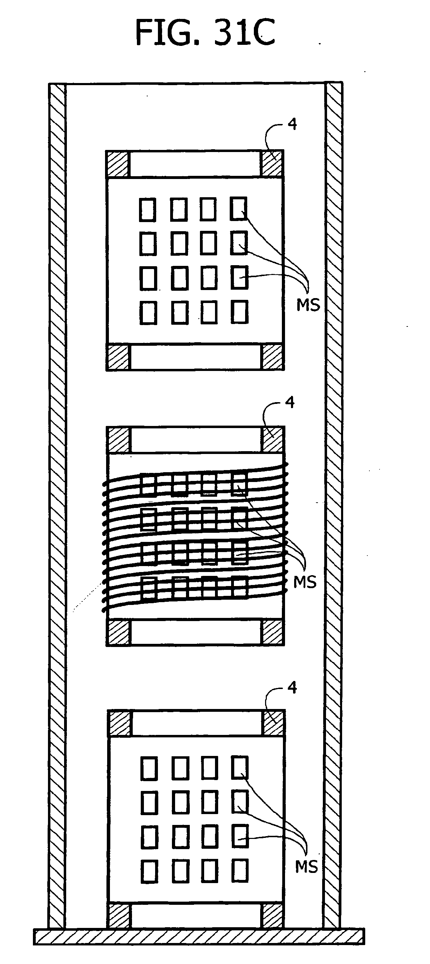

Figures 31a, 31b and 31c illustrate types of actuation in which either rigid or elastic polymeric non-magnetic means of separation or metallic non-magnetic means of separation MS are arranged on the components for preventing their direct contact and facilitating the passage between the condition of repulsion and that of attraction.

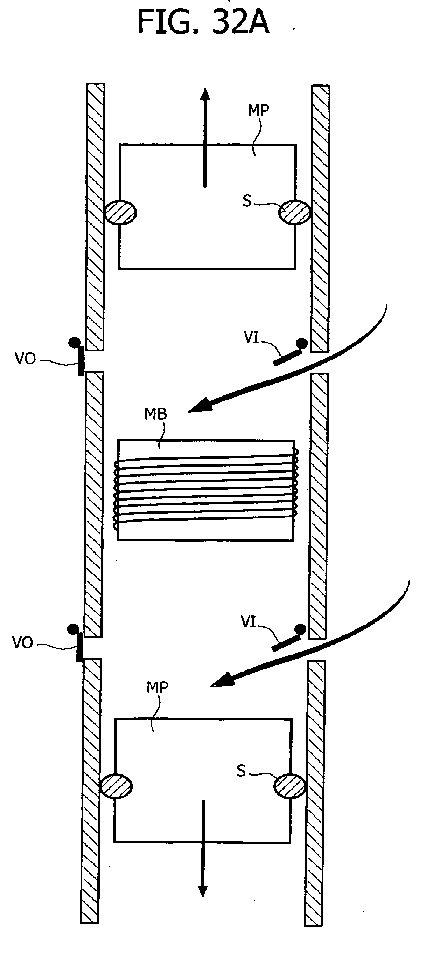

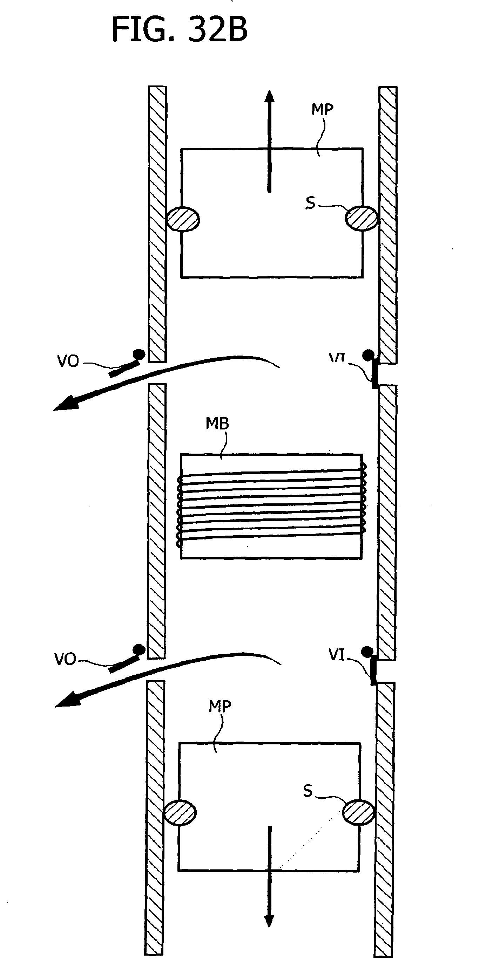

Figures 32a and 32b are schematic illustrations of the two operating steps of intake and pumping of a compressor system with valves VI, VO of a flexure type or of the electrical type for control of intake and pumping of air, gas or liquid. There are provided inlet and outlet openings for the fluid and seal rings S on the components 4.

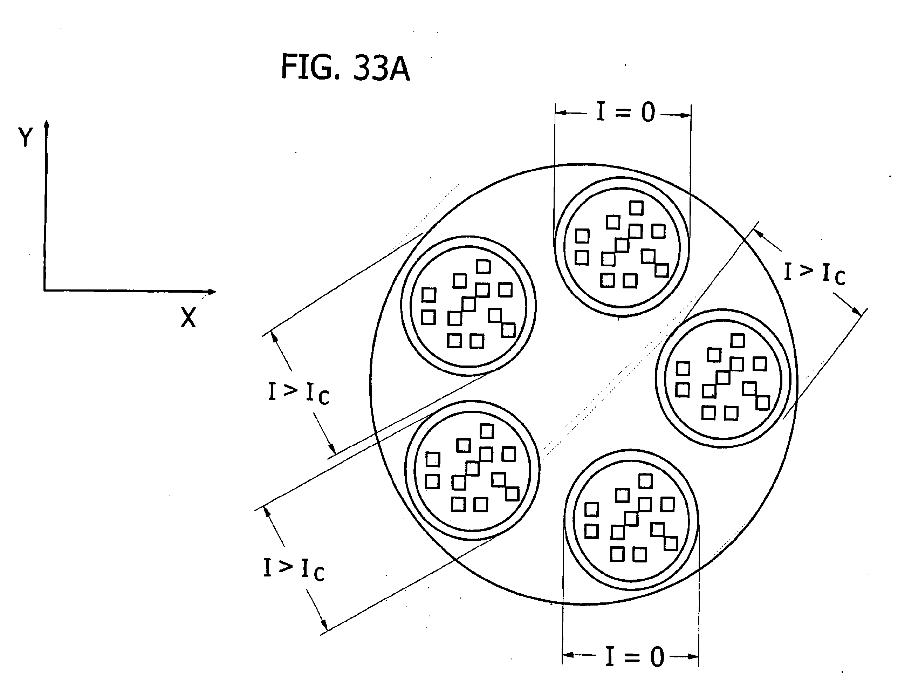

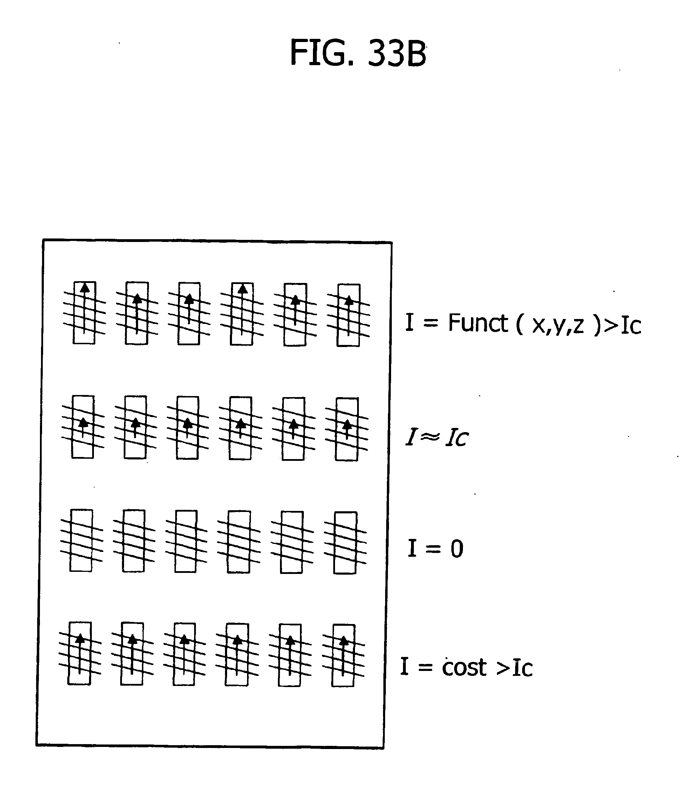

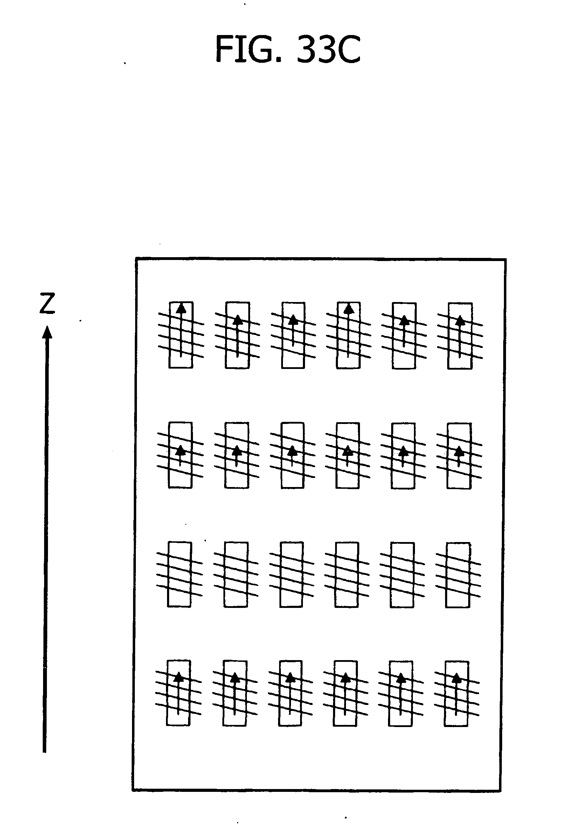

Figure 33 illustrates a multistage component consisting of a plurality of independent bistable composite elements set adjacent to one another or set on top of one another. Each element is equipped with its own winding. Consequently, the multistage component, according to the currents applied to the windings, may be configured in a multitude of levels of intensity of the resultant generated field in one of the two polarities.

Figure 33a is a view from above of the multistage component, in which a multitude of composites, of the column type are supplied by independent windings. In Figure 33b, the case is considered where the overall composite along the axis z consists of portions with elementary magnets made of different materials, and where control of each of these portions can be made through windings that require different currents in order to act on the polarity of the individual portion of composite. Figure 33c illustrates the case where the coils associated to the portions of composite can be supplied with alternating current with a modulation of the PDM or else PWM type.

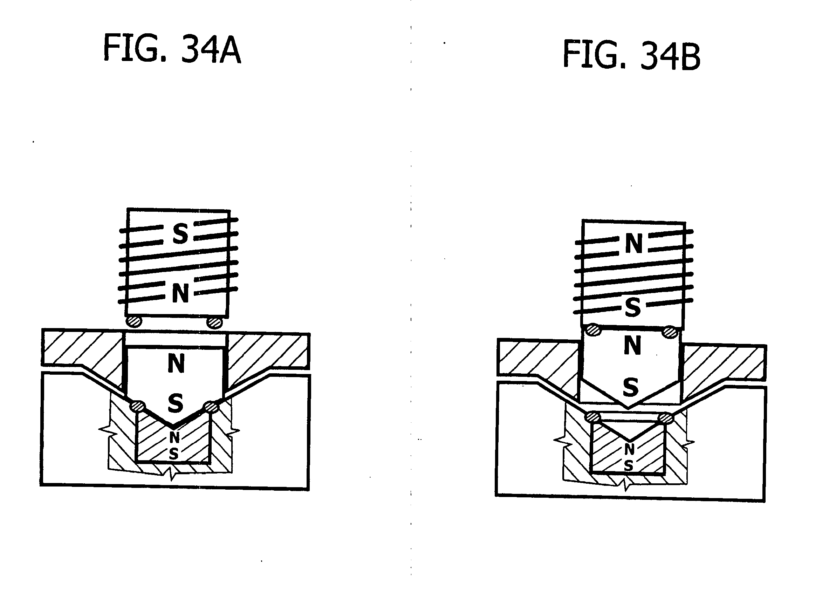

Figures 34a and 34b illustrate a valve for regulation of the flow of a gaseous or liquid fluid, which can operate indifferently with two or three composite magnetic elements. In this case, the separation means between the magnetic composites are preferably O-rings S made of elastic material, with high resistance to wear and with low porosity to prevent leakages.

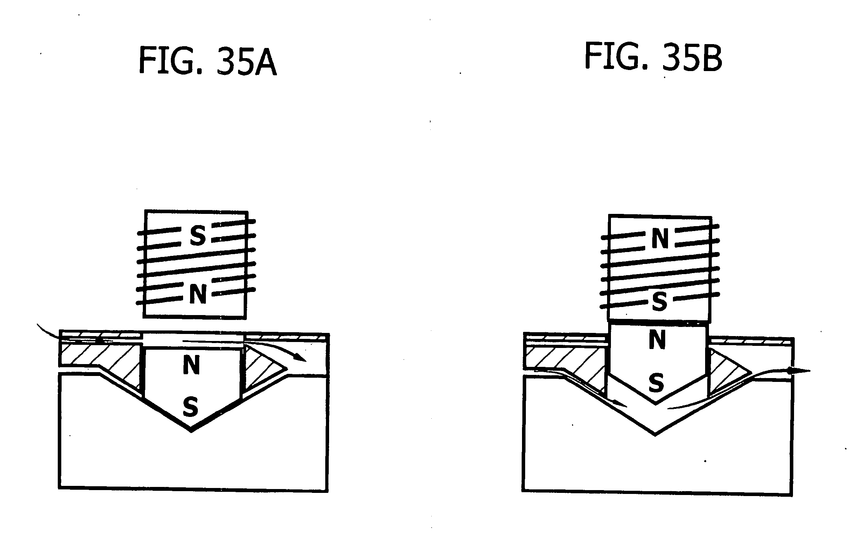

Figures 35a and 35b illustrate the case of a selector or mixer for fluids, which can also be implemented indifferently with two or three composite magnetic elements. As for the case of Figure 34, the separation means between the magnetic composites are preferably rings made of elastic material, with a high resistance to wear and with low porosity to prevent leakages.

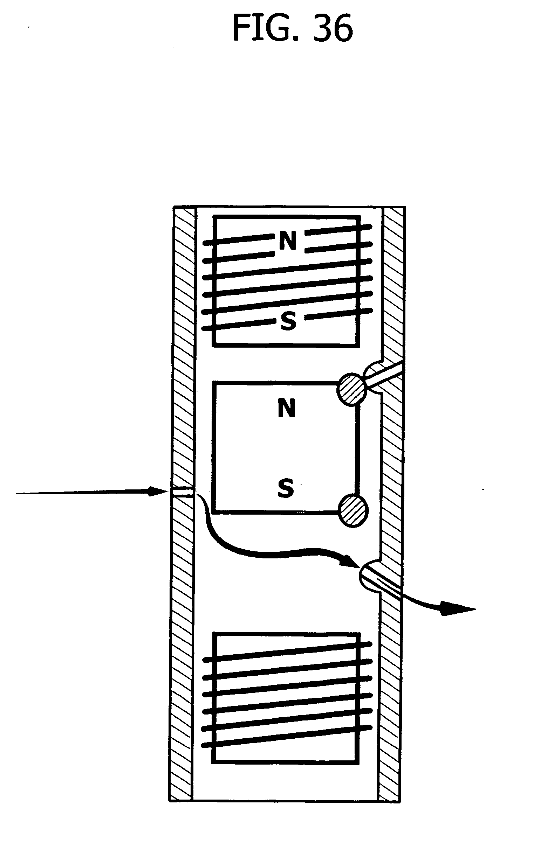

Figure 36 illustrates a two-way deviator for fluids, whether liquids or gases.

A further embodiment can envisage a hybrid use, in which an active system of the spring, shock-absorber, damper or suspension type can act alternatively also as system for recovering the energy generated by the movement of the magnetic elements in the winding means.

Of course, without prejudice to the principle of the invention, the details of construction and the embodiments may vary widely with respect to what is described and illustrated herein purely by way of example, without thereby departing from the scope of the present invention.

## Claims

1. A magnetic device, comprising:
- a plurality of magnetic components, slidably mounted within a longitudinal guide (6), in which at least one first series of said magnetic components, arranged so that they alternate with the remaining magnetic components of the device, consists of bistable magnetic components, i.e., one designed to maintain permanently their polarities in one direction or in the other following upon the excitation of a coil associated to each of them, with passage of current in one direction or in the other; and
- winding (7) or coil means associated to said bistable magnetic components, for reversing the polarity of the bistable magnetic components for the purpose of controlling passage of the device between a condition of operation in which the magnetic components repel one another (push operation) and a condition of operation in which the composite elements attract one another (pull operation);
**characterised in that** at least one of said magnetic components is a composite magnetic component comprising a body or matrix made of non-magnetic material (2) having two opposite main faces (3), and a plurality of elementary magnets (4) of pre-defined shape set at a distance from one another and englobed in the body (2) made of non-magnetic material and having their polarities oriented and aligned in a direction depending upon the shape of the main faces of the body and upon the shape of the elementary magnets (4) themselves.

2. The magnetic device according to Claim 1, **characterized in that** the magnetic elements (4) are arranged in three-dimensional space in a discrete way and in such a way that the magnetic field produced is the result of the collective behaviour of a multitude of elementary magnets.

3. The magnetic device according to Claim 2, **characterized in that** the resultant field produced by the composite structure of the component according to the invention has, around the poles, a magnetic field the lines of force of which, in contrast to the case of a conventional magnet, can be determined and defined via: the composition and the shape of the elementary magnets (4); the position of the elementary magnets (4) in the matrix; and the peripheral geometry of the composite component.

4. The magnetic device according to Claim 3, **characterized in that** in the proximity of the poles, the composite magnetic component has magnetic equipotential lines more orthogonal to the direction of magnetization and more parallel to one another with respect to the ones produced by a conventional magnet in the corresponding areas so as to give rise to a magnetic force more oriented in the direction of magnetization of the component.

5. The magnetic device according to Claim 3, **characterized in that** the geometrical distribution of the elementary magnets (4) as well as their composition and shape are such that the composite magnetic component exerts an attractive/repulsive force that is more uniform than that of a conventional magnet of equal magnetic mass, and has a pre-determined distribution of the intensity of the magnetic field in the space of interest.

6. The magnetic device according to Claim 3, **characterized in that** the overall geometry of the composite component (1), the geometry of the elementary magnets (4), the distribution or relative spacing or orientation of the elementary magnets (4), and the material that constitutes the elementary magnets (4) are chosen in such a way that the lines of force of the global magnetic field are pre-determined and controlled in their paths and in their intensity.

7. The magnetic device according to Claim 1, **characterized in that** the elementary magnets (4) are chosen between single-crystal magnets, single-domain ferromagnetic microparticles or nanoparticles, single-material or multilayer nanowires, molecules or complexes of magnetic molecules, or molecular magnetic clusters.

8. The magnetic device according to Claim 7, **characterized in that** the elementary magnets are magnetic molecules derived from the salts (tcnq = 7, 7, 8, 8-tetracyanoquinodimethane; [Fe₂ (η-C₅Me₅)₂ (µ-SEt)₂ (CO)₂]₂[tcnq] ₂ and derived from the salts tcne = tetracyanoethylene) [Fe₂ (η-C₅Me₅)₂ (µ-SEt)₂ (CO)₂] [tcne] .

9. The magnetic device according to Claim 7, in which the elementary magnets are magnetic molecules derived from ferracene, manganocene, chromocene, Mn₁₂Ac, V₁₅, Mn₆Rad₆, Fe₈, Fe₁₀, Fe₃₀, etc., the properties of which are due to the presence, in the molecule, of magnetic ions Mn, Fe, V, etc., coupled together by strong interactions of exchange (of the order of 79.6x10³ kA/m).

10. The magnetic device according to Claim 7 wherein said magnetic component is of the polymeric or ceramic type, in which the elementary magnets are high-spin molecules.

11. The magnetic device according to Claim 7, in which the elementary single-domain magnets, in the form of microparticles or nanoparticles, nanowires, or complex molecules or molecular clusters, have a marked magnetic anisotropy or a high coercivity in one direction.

12. The magnetic device according to Claim 11, in which the magnetic behaviour of the agglomerate is the result of the phenomenon of the magnetic co-operativity of the elementary magnets in a pre-set direction, which is in turn defined by the spatial organization of the elementary magnets themselves.

13. The magnetic device according to Claims 1 to 12, in which the inclusion, according to a spatial order pre-established by an analytical function, of elementary magnets of different size and chemical nature is obtained via chemical or physical or mechanical synthesis or by electrodeposition in porous matrices, via silk-screen printing or dipping, or spinning, or self-assembly, or else using techniques of a microelectronic type.

14. The magnetic device according to Claim 1, **characterized in that** it is provided with a cladding (5) along its perimetral wall consisting of a material with high magnetic permeability designed to confine and concentrate the lines of magnetic flux generated by the magnetic elements within it or in a desired area of space.

15. The magnetic device according to Claim 14, **characterized in that** said cladding material with high magnetic permeability masks part of the polar surfaces of the body of the composite magnetic component.

16. The magnetic device according to Claim 14, **characterized in that** said material with high magnetic permeability is a material with non-uniform permeability in space, for example a heterostructure with gradient or modulation of the magnetic permeability such as a variable-stoichiometry alloy, which is such as to enable a full control of the individual lines of magnetic field and of the magnetic equipotential lines throughout three-dimensional space.

17. The magnetic device according to Claim 14, **characterized in that** said material with high magnetic permeability is a multilayer structure made of materials with different physical characteristics.

18. The magnetic device according to Claim 17, **characterized in that** an intermediate layer of said multilayer structure consists of air.

19. The magnetic device according to Claim 1, **characterized in that** the non-magnetic material constituting the body (2) has a specific weight lower than that of the material of the magnetic elements (4).

20. The magnetic device according to Claim 1, **characterized in that** the magnetic elements (4) are arranged in a matrix or in any orderly reticular geometry having any period (from a few nanometres to some millimetres).

21. The magnetic device according to Claim 19, **characterized in that** the non-magnetic material is a synthetic material.

22. The magnetic device according to Claim 21, **characterized in that** the non-magnetic material is a polymeric material.

23. The magnetic device according to Claim 19, **characterized in that** the non-magnetic material is chosen between aluminium, copper, gold, dielectric material, porous material with heterogeneous porosity or orderly porosity, ceramic, composite, elastic material or in general a material chosen for particular physical properties, such as, for example, thermal and electrical conductivity.

24. The magnetic device according to Claim 1, **characterized in that** the individual elementary magnets (4) of the same component have magnetic properties (B-H curves) different from one another, in so far as said elementary magnets (4) are different in their shapes and/or are made of materials with different magnetic properties, the possibility of distributing in a regular way elementary magnets with different magnetic properties thus providing a further degree of freedom for predetermining the magnetic properties of the resulting composite and for rendering cycles of magnetization and remagnetization faster and energetically more efficient.

25. The magnetic device according to Claim 1, **characterized in that** the regular distribution of the elementary magnets (4) can be of the type with a periodic structure or a structure in which the elementary magnets (4) are arranged in the body of the matrix (2) according to pre-set analytical functions.

26. The magnetic device according to Claim 25, **characterized in that** the composite component is of a bistable type, i.e., designed to maintain permanently its polarity in one direction or in the other following upon the excitation of a coil, preferably a superconductive coil, associated thereto with passage of current in one direction or in the other, the elementary magnets (whether soft or hard, in the form of nanoparticles or of single-domain or multidomain molecular clusters) being arranged, within the field which is generated by the coil and is uniformly distributed throughout the composite, according to spatial co-ordinates with orientation such that the reversal of the current in the coil induces the simultaneous reversal of the polarity in all the elementary magnets (4) of the matrix (2).

27. The magnetic device according to Claim 1, **characterized in that** the magnetic elements are slidably engaged on a rail made on the internal surface of the guide (6).

28. The magnetic device according to Claim 27, **characterized in that** the guide is a tubular element or a simple wire or rod or set of runner rods.

29. The magnetic device according to Claim 1, **characterized in that** it comprises just two magnetic components, only one of which is bistable.

30. The magnetic device according to Claim 27, **characterized in that** it comprises at least three magnetic components.

31. The magnetic device according to Claim 30, **characterized in that** it comprises three magnetic components of which the one in the intermediate position is bistable, preferably with high remanent magnetization, the other two end components being rigidly connected to one another, with possibility of movement with respect to the intermediate bistable component, said intermediate bistable component being fixed in position or temporarily clampable in position, and the polarities of the two end magnetic components being opposite to one another so that, following upon excitation of the coil means associated to the intermediate component, the latter attracts one of the two end components and repels the other, the reversal of the polarity of the intermediate component thus imparting a linear reciprocating motion to the system of the end components connected to one another.

32. The magnetic device according to Claim 1, **characterized in that** it constitutes an actuator device of a push-pull type, in which a magnetic component is set at the end of the series of magnetic components and is operatively connected to a driven member.

33. The magnetic device according to Claim 1, **characterized in that** the aforesaid winding or coil means comprise windings that are arranged around the portions of the tubular guide (6) that are traversed in operation by the bistable magnetic components, or else are arranged along the entire tubular guide (6).

34. The magnetic device according to Claim 1, **characterized in that** the aforesaid winding or coil means comprise windings that are mounted on each bistable magnetic component within the guide (6).

35. The magnetic device according to Claim 34, **characterized in that** each winding is supplied by means of a battery carried by the bistable magnetic component.

36. The magnetic device according to Claim 34, **characterized in that** each winding is supplied by means of sliding contacts that co-operate with two electrical paths provided within the tubular guide (6).

37. The magnetic device according to Claim 35, **characterized in that** it includes a unit for generation or conversion of energy and a wireless unit for communication with the outside world.

38. The magnetic device according to Claim 1, **characterized in that** it comprises a plurality of independent bistable magnetic components set adjacent to or on top of one another, each equipped with its own winding, and forming a single multistage element, which, according to the currents applied to the individual windings, may be configured in a multitude of levels of intensity of the field generated in one of the two polarities.

39. The magnetic device according to Claim 1, **characterized in that** the non-magnetic body of one or more of the composite magnetic components is made of elastic material and, consequently, compressible and expandable, said element being provided inside with a clamping unit that can expand radially for clamping the composite magnetic component in a definite position with respect to the guide (6).

40. The magnetic device according to Claim 39, **characterized in tha**t it comprises means for controlling activation of the clamping unit associated to one or more magnetic components, for clamping appropriately first one and then the other component, or pairs (or any multiplicity) of components, for the purpose of moving the entire chain of components along the guide (6).

41. The magnetic device according to Claim 39, **characterized in that** each clamping unit is formed by a pair, or by any multiplicity of (soft and hard) magnetic sub-elements that form a jaw that can open (clamping by expansion) and close (component free to move) upon command, said clamping unit being integrable both in the components with permanent polarity and in bistable ones and in general in one or more components of the chain.

42. The magnetic device according to Claim 41, **characterized in that** each sub-element made of bistable magnetic material constituting the clamping unit is equipped with a coil fixed thereto that is able to magnetize in one direction or in the other the sub-element to which it is coupled.

43. The magnetic device according to Claim 41, **characterized in that** the magnetic sub-element is equipped with a battery for self-supply of the coil, and preferably also with a unit for generating or converting energy, and with a wireless port for remote communication.

44. The magnetic device according to Claim 41, **characterized in that**, in a configuration of stepper actuator, in the condition of rest the sub-elements of the clamping unit are in the clamping position, and, at the moment of application of the current in the respective windings, they move into the position of release.

45. The magnetic device according to Claim 41, **characterized in that**, in a configuration of spring actuator or a configuration of the shock absorber-suspension type, in the condition of rest the sub-elements of the clamping unit are in the position of release, and, at the moment of application of the current in the respective windings, they move into the clamping position.

46. The magnetic device according to Claim 41, **characterized in that** inserted between the mobile magnetic components are elastic polymeric spacers, or plastic spacers, or non-magnetic-metal spacers designed to prevent direct contact of the components.

47. The magnetic device according to Claim 32, **characterized in that** the magnetic component of the push-pull device set at the end opposite to that of the driven member is constrained to a fixed structure.

48. A compressor, **characterized in that** it comprises a device according to Claim 32.

49. The magnetic device according to Claim 1, **characterized in that** the magnetic components are mobile within a fluid or a lubricant.

50. The magnetic device according to Claim 1, **characterized in that** it is provided with control means for being used in a reverse way, for the purpose of recovering energy within a coil set around the tubular guide (6) following upon movement of a magnetic component inside it.

51. The magnetic device according to Claim 27 or Claim 1, **characterized in that** it is prearranged for being used as position sensor by means of co-operation of the mobile magnetic components with a reference magnetic strip.

52. The magnetic device with two or three elements according to Claim 40, **characterized in that** it is provided with control means for advancing the chain of magnetic components in discrete steps along a path of length defined by the guide (6) by means of successive activations and deactivations of the clamping means associated to one or more of the components.

53. The device with two or three elements according to Claim 40, **characterized in that** it constitutes a stepper magnetic actuator-motor for a lift or elevator.

54. Use of a device according to Claim 1 in valves for regulating the flow of a fluid , said device having Arm on three of said magnetic components.

55. Use of a device according to Claim 1 in fluid deviators , said device having Arm in three of said magnetic components.

56. Use of a device according to Claim 1 in fluid selectors or mixers , said device having Arm on three of said magnetic components.

57. The magnetic device according to Claim 31, **characterized in that** the composite magnets are formed by a succession of a multiplicity of ferromagnetic or antiferromagnetic FeMn, IrMn layers coupled by means of interaction of layer-layer exchange, in such a way that a first layer with high coercivity and low saturation magnetization force the magnetization of a second adjacent layer with low coercivity and high saturation in a desired direction, the composite material thus obtained having a high product of energy, which means high saturation and at the same time high coercivity.

58. The magnetic device according to Claim 57, **characterized in that** it is made entirely with conventional (massive bulk) magnets, or else both with conventional (massive bulk) magnets and with composite magnetic components, one or more of the latter possibly being of the type referred to above, with interacting layers.

## Patentansprüche

1. Magnetische Vorrichtung, umfassend:
- eine Mehrzahl von magnetischen Komponenten, die verschiebbar in einer länglichen Führung (6) angebracht sind, in welcher wenigstens eine erste Reihe der magnetischen Komponenten, die derart angeordnet sind, dass sie sich mit den übrigen magnetischen Komponenten der Vorrichtung abwechseln, aus bistabilen magnetischen Komponenten besteht, d.h., eine, die dazu entworfen ist, ihre Polaritäten in einer Richtung oder in der anderen aufrechtzuerhalten, als Folge der Anregung einer ihnen zugeordneten Spule, mit einem Stromfluss in eine Richtung oder in die andere; und
- den bistabilen magnetischen Komponenten zugeordnete Wicklungen (7) oder Spulenmittel, um die Polarität der bistabilen magnetischen Komponenten zum Zweck eines Steuerns eines Übergangs der Vorrichtung zwischen einem Betriebszustand, in welchem die magnetischen Komponenten einander abstoßen (Schubbetrieb) und einem Betriebszustand, in welchem die zusammengefassten Elemente einander anziehen (Zugbetrieb), umzukehren;
**dadurch gekennzeichnet, dass**
wenigstens eine der magnetischen Komponenten eine magnetische Kompositkomponente ist, die einen/eine aus nicht-magnetischem Material gefertigten Körper oder Matrix (2) mit zwei gegenüberliegenden Hauptflächen (3) und eine Mehrzahl von elementaren Magneten (4) von vorbestimmter Form, die unter einem Abstand voneinander angeordnet sind und in dem aus nicht-magnetischem Material gefertigten Körper (2) aufgenommen sind, umfasst, und wobei ihre Polaritäten in einer Richtung orientiert und angeordnet sind, welche von der Form der Hauptflächen des Körpers und von der Form der elementaren Magneten (4) selbst abhängig ist.

2. Magnetische Vorrichtung nach Anspruch 1, **dadurch gekennzeichnet, dass** die magnetischen Elemente (4) im drei-dimensionalen Raum einzeln und derart angeordnet sind, dass das erzeugte magnetische Feld das Ergebnis des gesamten Verhaltens einer Vielzahl von elementaren Magneten ist.

3. Magnetische Vorrichtung nach Anspruch 2, **dadurch gekennzeichnet, dass** das sich ergebende Feld, das von der Kompositstruktur der erfindungsgemäßen Komponente erzeugt ist, um die Pole herum ein magnetisches Feld aufweist, dessen Kraftlinien, im Gegensatz zu dem Falle eines herkömmlichen Magneten, bestimmt und definiert werden kann durch: die Zusammensetzung und Form der elementaren Magnete (4); die Position der elementaren Magnete (4) in der Matrix; und die umfängliche Geometrie der Kompositkomponente.

4. Magnetische Vorrichtung nach Anspruch 3, **dadurch gekennzeichnet, dass** die magnetische Kompositkomponente in der Nähe der Pole magnetische Äquipotentiallinien aufweist, die in Bezug auf die durch einen herkömmlichen Magneten in den entsprechenden Bereichen erzeugten mehr orthogonal zu der Richtung der Magnetisierung und mehr parallel zueinander sind, was zu einer mehr in der Richtung der Magnetisierung der Komponente orientierten magnetischen Kraft führt.

5. Magnetische Vorrichtung nach Anspruch 3, **dadurch gekennzeichnet, dass** die geometrische Verteilung der elementaren Magnete (4) wie auch ihre Zusammensetzung und Form derart sind, dass das magnetische Kompositmaterial eine Anziehungs-/Abstoßungskraft ausübt, die gleichmäßiger als die eines herkömmlichen Magneten von gleicher magnetischer Masse ist und eine vorbestimmte Verteilung der Intensität des Magnetfelds in dem interessierenden Raum aufweist.

6. Magnetische Vorrichtung nach Anspruch 3, **dadurch gekennzeichnet, dass** die gesamte Geometrie der Kompositkomponente (1), die Geometrie der elementaren Magnete (4), die Verteilung oder der relative Abstand oder die Orientierung der elementaren Magnete (4) sowie das die elementaren Magnete (4) bildende Material derart gewählt sind, dass die Kraftlinien des magnetischen Gesamtfelds in ihren Verläufen und Intensitäten vorbestimmt und gesteuert sind.

7. Magnetische Vorrichtung nach Anspruch 1, **dadurch gekennzeichnet, dass** die elementaren Magnete (4) unter Einkristallmagneten, ferromagnetischen Einzeldomänenmikropartikeln oder -nanopartikeln, Einzelmaterial- oder Mehrschichtnanodrähten, Molekülen oder Komplexen magnetischer Moleküle oder molekularer magnetischer Cluster ausgewählt sind.

8. Magnetische Vorrichtung nach Anspruch 7, **dadurch gekennzeichnet, dass** die elementaren Magnete von den Salzen (tcnq = 7, 7, 8, 8-tetracyanoquinodimethan; [Fe₂(_{η}-C₅Me₅)₂(µ-SEt)₂(CO)₂]₂[tcnq] ₂ abgeleitete und von den Salzen tcne = tetracyanoethylen) [Fe₂ (η-C₅Me₅)₂(µ-SEt)₂(CO)_{2]} [tcne] abgeleitete magnetische Moleküle sind.

9. Magnetische Vorrichtung nach Anspruch 7, worin die elementaren Magnete von Ferrocen, Manganocen, Chromocen, Mn₁₂Ac, V₁₅, Mn₆Rad₆, Fe₈, Fe₁₀, Fe₃₀, etc., abgeleitete magnetische Moleküle sind, deren Eigenschaften aufgrund der Anwesenheit von magnetischen Ionen Mn, Fe, V, etc. in dem Molekül durch starke Austauschwechselwirkungen gekoppelt sind (in der Größenordnung von 79,6x10³ kA/m).

10. Magnetische Vorrichtung nach Anspruch 7, worin die magnetische Komponente von einem Polymer- oder Keramiktyp ist, worin die elementaren Magnete Moleküle mit einem großen Spin sind.

11. Magnetische Vorrichtung nach Anspruch 7, worin die elementaren Einzeldomänenmagnete, in der Form von Mikropartikeln oder Nanopartikeln, Nanodrähten oder komplexen Molekülen oder Molekularclustem, eine ausgeprägte magnetische Anisotropie oder hohe Koerzitivkraft in einer Richtung aufweisen.

12. Magnetische Vorrichtung nach Anspruch 11, worin das magnetische Verhalten des Agglomerats das Ergebnis des Phänomens des magnetischen Zusammenarbeitvermögens der elementaren Magnete in einer voreingestellten Richtung ist, welche wiederum durch die räumliche Anordnung der elementaren Magnete selber definiert ist.

13. Magnetische Vorrichtung nach Anspruch 1 bis 12, worin der Einschluss, entsprechend einer durch eine analytische Funktion voreingerichteten räumlichen Ordnung, von elementaren Magneten unterschiedlicher Größe und Zusammensetzung durch chemische oder physikalische oder mechanische Synthese oder durch elektrolytische Abscheidung in porösen Matrizen, durch Siebdruck oder Tauchen oder Schleuderverfahren oder Selbst-Zusammenbau oder anderes erhalten wird, wobei Verfahren von einem Mikroelektroniktyp verwendet werden.

14. Magnetische Vorrichtung nach Anspruch 1, **dadurch gekennzeichnet, dass** sie entlang ihrer umfänglichen Wand mit einer Verkleidung (5) versehen ist, welche aus einem Material mit einer hohen magnetischen Permeabilität besteht, welches dazu entworfen ist, die durch die magnetischen Elemente erzeugten Magnetflusslinien in ihr oder in einem gewünschten Raumbereich einzugrenzen und zu konzentrieren.

15. Magnetische Vorrichtung nach Anspruch 14, **dadurch gekennzeichnet, dass** das Verkleidungsmaterial mit hoher magnetischer Permeabilität einen Teil der polaren Oberflächen des Körpers der magnetischen Kompositkomponente abdeckt.

16. Magnetische Vorrichtung nach Anspruch 14, **dadurch gekennzeichnet, dass** das Material mit hoher magnetischer Permeabilität ein Material mit einer nicht-gleichmäßigen Permeabilität im Raum ist, beispielsweise eine Heterostruktur mit Gradient oder Modulation der magnetischen Permeabilität wie beispielsweise einer Legierung von variabler Stöchiometrie, welche derart ausgebildet ist, dass sie eine vollständige Steuerung der einzelnen Magnetfeldlinien und der magnetischen Äquipotentiallinien durch den dreidimensionalen Raum gestattet.

17. Magnetische Vorrichtung nach Anspruch 14, **dadurch gekennzeichnet, dass** das Material von hoher magnetischer Permeabilität eine aus Materialien mit verschiedenen physikalischen Merkmalen gefertigte Mehrschichtstruktur ist.

18. Magnetische Vorrichtung nach Anspruch 17, **dadurch gekennzeichnet, dass** eine Zwischenschicht der Mehrschichtstruktur aus Luft besteht.

19. Magnetische Vorrichtung nach Anspruch 1, **dadurch gekennzeichnet, dass** das den Körper (2) bildende nichtmagnetische Material ein spezifisches Gewicht hat, das geringer ist als das Material der magnetischen Elemente (4).

20. Magnetische Vorrichtung nach Anspruch 1, **dadurch gekennzeichnet, dass** die magnetischen Elemente (4) in einer Matrix oder einer beliebigen geordneten netzartigen Struktur mit einer beliebigen Periode (von einigen wenigen Nanometern bis einigen Millimetern) angeordnet sind.

21. Magnetische Vorrichtung nach Anspruch 19, **dadurch gekennzeichnet, dass** das nicht-magnetische Material ein synthetisches Material ist.

22. Magnetische Vorrichtung nach Anspruch 21, **dadurch gekennzeichnet, dass** das nicht-magnetische Material ein polymeres Material ist.

23. Magnetische Vorrichtung nach Anspruch 19, **dadurch gekennzeichnet, dass** das nicht-magnetische Material aus Aluminium, Kupfer, Gold, dielektrischem Material, porösem Material mit heterogener Porosität oder geordneter Porosität, Keramik, Komposit, elastischem Material oder allgemein einem wegen besonderer physikalischer Eigenschaften, wie beispielsweise thermischer und elektrischer Leitfähigkeit, ausgewähltem Material ausgewählt ist.

24. Magnetische Vorrichtung nach Anspruch 1, **dadurch gekennzeichnet, dass** die einzelnen elementaren Magnete (4) derselben Komponente voneinander unterschiedliche magnetische Eigenschaften (B-H-Kurven) insoweit aufweisen, als die elementaren Magnete (4) unterschiedliche Formen aufweisen und/oder aus Materialien mit unterschiedlichen magnetischen Eigenschaften gefertigt sind, so dass die Möglichkeit, elementare Magnete mit unterschiedlichen Eigenschaften auf eine reguläre Weise zu verteilen, einen weiteren Freiheitsgrad zum Vorbestimmen der magnetischen Eigenschaften des sich ergebenden Komposits und, um Magnetisierungs- und Rückmagnetisierungszyklen schneller und energetisch effizienter zu machen, bereitstellt.

25. Magnetische Vorrichtung nach Anspruch 1, **dadurch gekennzeichnet, dass** die reguläre Verteilung der elementaren Magnete (4) von dem Typ mit einer periodischen Struktur oder einer Struktur, in welcher die elementaren Magnete (4) in dem Körper der Matrix (2) entsprechend vorgegebenen analytischen Funktionen angeordnet sind, sein kann.

26. Magnetische Vorrichtung nach Anspruch 25, **dadurch gekennzeichnet, dass** die Kompositkomponente von einem bistabilen Typ ist, d.h., entworfen, im Anschluss an die Anregung einer Spule, vorzugsweise einer supraleitenden Spule, verbunden mit einem Stromfluss in eine Richtung oder in die andere, wobei die elementaren Magnete (ob weich oder hart, in der Form von Nanopartikeln oder von molekularen Einzeldomänen- oder Multidomänenclustem) in dem Feld angeordnet sind, welches durch die Spule erzeugt wird und gleichmäßig durch den Komposit verteilt ist, entsprechend Raumkoordinaten mit einer Orientierung, so dass die Umkehr des Stroms in der Spule die gleichzeitige Umkehr der Polarität in allen elementaren Magneten (4) der Matrix (2) induziert, ihre Polarität in einer Richtung oder in die andere permanent aufrechtzuerhalten.

27. Magnetische Vorrichtung nach Anspruch 1, **dadurch gekennzeichnet, dass** die magnetischen Elemente auf einer an der inneren Oberfläche der Führung (6) angefertigten Schiene verschiebbar im Eingriff sind.

28. Magnetische Vorrichtung nach Anspruch 27, **dadurch gekennzeichnet, dass** die Führung ein röhrenförmiges Element oder ein einfacher Draht oder Stab oder ein Satz von Laufstäben ist.

29. Magnetische Vorrichtung nach Anspruch 1, **dadurch gekennzeichnet, dass** sie nur zwei magnetische Komponenten umfasst, von denen nur eine bistabil ist.

30. Magnetische Vorrichtung nach Anspruch 27, **dadurch gekennzeichnet, dass** sie wenigstens drei magnetische Komponenten umfasst.

31. Magnetische Vorrichtung nach Anspruch 30, **dadurch gekennzeichnet, dass** sie drei magnetische Komponenten umfasst, von denen die in der Zwischenposition bistabil ist, vorzugsweise mit hoher remanenter Magnetisierung, und die anderen zwei Endkomponenten starr miteinander verbunden sind, mit einer Bewegungsmöglichkeit in Bezug auf die bistabile Zwischenkomponente, wobei die bistabile Zwischenkomponente an Ort und Stelle festgelegt ist oder zeitweilig an Ort und Stelle klemmbar ist, und die Polaritäten der zwei magnetischen Endkomponenten einander gegenüber angeordnet sind, so dass, in Folge einer Anregung des der Zwischenkomponente zugeordneten Spulenmittels, die letztere eine der beiden Endkomponenten anzieht und die andere abstößt, so dass die Umkehr der Polarität der Zwischenkomponente dem System der miteinander verbundenen Endkomponenten eine lineare Hin- und Herbewegung vermittelt.

32. Magnetische Vorrichtung nach Anspruch 1, **dadurch gekennzeichnet, dass** sie eine Betätigungsvorrichtung eines Schub-Zug-Typs bildet, in welchem eine magnetische Komponente an dem Ende der Reihe magnetischer Komponenten gesetzt ist und wirksam mit einem angetrieben Teil verbunden ist.

33. Magnetische Vorrichtung nach Anspruch 1, **dadurch gekennzeichnet, dass** die Wicklung oder das Spulenmittel Wicklungen umfasst, die um die Bereiche der röhrenförmigen Führung (6) herum angeordnet sind und die im Betrieb von den bistabilen magnetischen Komponente durchlaufen werden oder sonst entlang der gesamten röhrenförmigen Führung (6) angeordnet sind.

34. Magnetische Vorrichtung nach Anspruch 1, **dadurch gekennzeichnet, dass** die Wicklung oder das Spulenmittel Wicklungen umfasst, die an jeder bistabilen magnetischen Komponente innerhalb der Führung (6) angebracht sind.

35. Magnetische Vorrichtung nach Anspruch 34, **dadurch gekennzeichnet, dass** jede Wicklung mittels einer Batterie versorgt wird, die von der bistabilen magnetischen Komponente getragen wird.

36. Magnetische Vorrichtung nach Anspruch 34, **dadurch gekennzeichnet, dass** jede Wicklung mittels verschiebbarer Kontakte versorgt wird, die mit innerhalb der röhrenförmigen Führung (6) bereitgestellten zwei elektrischen Pfaden zusammenarbeiten.

37. Magnetische Vorrichtung nach Anspruch 35, **dadurch gekennzeichnet, dass** sie eine Einheit zur Erzeugung oder zur Umwandlung von Energie und eine drahtlose Einheit zur Kommunikation mit der Außenwelt beinhaltet.

38. Magnetische Vorrichtung nach Anspruch 1, **dadurch gekennzeichnet, dass** sie eine Mehrzahl von unabhängigen bistabilen magnetischen Komponenten umfasst, die zueinander benachbart oder aufeinander gesetzt sind, wobei jede mit ihrer eigenen Wicklung versehen ist, und ein einzelnes Multistufenelement bilden, welches, entsprechend den auf die einzelnen Wicklungen zugeführten Strömen, in einer Vielzahl von Intensitätsgraden des in einer der beiden Polaritäten erzeugten Felds konfiguriert sein kann.

39. Magnetische Vorrichtung nach Anspruch 1, **dadurch gekennzeichnet, dass** der nicht-magnetische Körper eines oder mehrerer der magnetischen Kompositkomponenten aus einem elastischen Material gefertigt ist und daher kompressibel und expandierbar ist, wobei das Element innerhalb einer Klemmeinheit bereitgestellt ist, die radial expandieren kann, um die magnetische Kompositkomponente in einer definierten Position in Bezug auf die Führung (6) zu klemmen.

40. Magnetische Vorrichtung nach Anspruch 39, **dadurch gekennzeichnet, dass** sie Mittel zum Steuern einer Aktivierung der mit der einen oder den mehreren magnetischen Komponenten verbundenen Klemmeinheit umfasst, um in geeigneter Weise zunächst die eine und dann die andere Komponente, oder Paare (oder jegliche Vielfalt) von Komponenten zu klammem, um die gesamte Kette von Komponenten entlang der Führung (6) zu bewegen.

41. Magnetische Vorrichtung nach Anspruch 39, **dadurch gekennzeichnet, dass** jede Klemmeinheit durch ein Paar oder jegliche Vielfalt von (weichen und harten) magnetischen Subelementen gebildet ist, die eine Klaue bilden, die sich auf Anweisung öffnen (Klemmen durch Expansion) und schließen (Komponente frei, sich zu bewegen) kann, wobei die Klemmeinheit sowohl in die Komponenten mit permanenter Polarität als auch in die bistabilen und im Allgemeinen in ein oder mehrere Komponenten der Kette einbaubar ist.

42. Magnetische Vorrichtung nach Anspruch 41, **dadurch gekennzeichnet, dass** jedes aus einem bistabilen magnetischen Material gebildete, die Klemmeinheit bildende Subelement mit einer daran festgelegten Spule versehen ist, welche in der Lage ist, das Subelement, mit welchem sie gekoppelt ist, in einer Richtung oder in die andere Richtung zu magnetisieren.

43. Magnetische Vorrichtung nach Anspruch 41, **dadurch gekennzeichnet, dass** das magnetische Subelement mit einer Batterie zur Selbstversorgung der Spule und bevorzugt auch mit einer Einheit zur Erzeugung oder zur Umwandlung von Energie und mit einer drahtlosen Schnittstelle für ferne Kommunikation versehen ist.

44. Magnetische Vorrichtung nach Anspruch 41, **dadurch gekennzeichnet, dass** in einer Konfiguration eines Schritt-Betätigungsglieds die Subelemente der Klemmeinheit in dem Ruhezustand in der Klemmstellung sind und sie sich, in dem Augenblick der Anwendung des Stroms in den jeweiligen Wicklungen, in die Freigabestellung bewegen.

45. Magnetische Vorrichtung nach Anspruch 41, **dadurch gekennzeichnet, dass** in einer Konfiguration eines Feder-Betätigungsgliedes oder einer Konfiguration vom Typ einer Stoßdämpfer-Aufhängung, die Subelemente der Klemmeinheit im Ruhezustand in der Freigabestellung sind, und sie sich in dem Moment der Anwendung des Stroms in den jeweiligen Wicklungen in die Klemmposition bewegen.

46. Magnetische Vorrichtung nach Anspruch 41, **dadurch gekennzeichnet, dass** zwischen den beweglichen magnetischen Komponenten elastische polymere Abstandshalter oder Abstandshalter aus Plastik oder Abstandshalter aus einem nicht-magnetischen Metall eingefügt sind, die dazu entworfen sind, einen direkten Kontakt der Komponente zu verhindern.

47. Magnetische Vorrichtung nach Anspruch 32, **dadurch gekennzeichnet, dass** die an dem dem Ende des angetriebenen Teils gegenüberliegenden Ende angeordnete magnetische Komponente der Schub-Zug-Vorrichtung auf eine festgelegte Struktur eingeschränkt ist.

48. Kompressor, **dadurch gekennzeichnet, dass** er eine Vorrichtung nach Anspruch 32 umfasst.

49. Magnetische Vorrichtung nach Anspruch 1, **dadurch gekennzeichnet, dass** die magnetischen Komponenten in einer Flüssigkeit oder einem Schmiermittel beweglich sind.

50. Magnetische Vorrichtung nach Anspruch 1, **dadurch gekennzeichnet, dass** sie mit Steuerungsmitteln zur Verwendung auf umgekehrte Weise versehen sind, um infolge einer Bewegung einer magnetischen Komponente innerhalb einer Spule Energie in der Spule zurückzugewinnen, welche um die röhrenförmige Führung (6) herum angeordnet ist.

51. Magnetische Vorrichtung nach Anspruch 27 oder Anspruch 1, **dadurch gekennzeichnet, dass** sie vorangeordnet ist, um mittels einer Zusammenarbeit der beweglichen magnetischen Komponenten mit einem magnetischen Referenzstreifen, als Positionssensor verwendet zu werden.

52. Magnetische Vorrichtung mit zwei oder drei Elementen gemäß Anspruch 40, **dadurch gekennzeichnet, dass** sie mit Steuerungsmitteln versehen ist, um mittels aufeinanderfolgender Aktivierungen und Deaktivierungen des mit einem oder mehreren der Komponenten verbundenen Klemmmittels die Kette von magnetischen Schritten in einzelnen Schritten entlang eines Pfads einer durch die Führung (6) definierten Länge zu befördern.

53. Vorrichtung mit zwei oder drei Elementen gemäß Anspruch 40, **dadurch gekennzeichnet, dass** sie einen magnetischen Betätigungsschrittmotor für einen Lift oder Fahrstuhl bildet.

54. Verwendung einer Vorrichtung nach Anspruch 1 in Ventilen, um den Fluss einer Flüssigkeit zu regulieren, wobei die Vorrichtung zwei oder mehr der magnetischen Komponenten aufweist.

55. Verwendung einer Vorrichtung nach Anspruch 1 in Flüssigkeitsumlenkern, wobei die Vorrichtung zwei oder mehr der magnetischen Komponenten aufweist.

56. Verwendung einer Vorrichtung nach Anspruch 1 in Flüssigkeitsauswahlteilen oder Mischern, wobei die Vorrichtung zwei oder mehr der magnetischen Komponenten aufweist.

57. Magnetische Vorrichtung nach Anspruch 31, **dadurch gekennzeichnet, dass** die Kompositmagnete durch eine Abfolge einer Vielfalt von ferromagnetischen oder anti-ferromagnetischen FeMn-, IrMn-Schichten gebildet sind, wobei sie mittels einer Wechselwirkung eines Schicht-Schicht-Austauschs derart gekoppelt sind, dass eine erste Schicht mit hoher Koerzivität und geringer Magnetisierungssättigungskraft die Magnetisierung einer zweiten benachbarten Schicht mit geringer Koerzivität und hoher Sättigung in eine gewünschte Richtung zwingt, wobei das so erhaltene Kompositmaterial ein hohes Produkt von Energie aufweist, was eine hohe Sättigung und zur selben Zeit hohe Koerzivität bedeutet.

58. Magnetische Vorrichtung nach Anspruch 57, **dadurch gekennzeichnet, dass** sie vollständig aus herkömmlichen (massiven Hauptmasse-) Magneten oder sonst aus herkömmlichen (massiven Hauptmasse-) Magneten und mit magnetischen Kompositkomponenten gefertigt ist, wobei ein oder mehrere des letzteren möglicherweise von dem Typ sind, auf den oben Bezug genommen wurde, mit miteinander wechselwirkenden Schichten.

## Revendications

1. Dispositif magnétique comprenant :
- une pluralité de composants magnétiques, montée avec faculté de coulissement dans un guide longitudinal (6), dans laquelle au moins une première série desdits composants magnétiques, disposés de sorte qu'ils alternent avec les composants magnétiques restants du dispositif, consiste en composants magnétiques bistables, c'est-à-dire, conçus pour conserver en permanence leurs polarités dans une direction ou dans l'autre à la suite de l'excitation d'une bobine associée à chacun d'eux, avec le passage du courant dans une direction ou dans l'autre ; et
- des moyens d'enroulement (7) ou de bobine associés auxdits composants magnétiques bistables, pour inverser la polarité des composants magnétiques bistables dans le but de commander le passage du dispositif entre une condition de fonctionnement dans laquelle les composants magnétiques se repoussent l'un l'autre (fonctionnement en répulsion) et une condition de fonctionnement dans laquelle les éléments composites s'attirent l'un l'autre (fonctionnement en attraction) ;
**caractérisé en ce qu'**au moins un desdits composants magnétiques est un composant magnétique composite comprenant un corps ou une matrice faite d'un matériau non magnétique (2) comportant deux faces opposées principales (3), et une pluralité d'aimants élémentaires (4) de forme prédéfinie installés à une certaine distance les uns des autres et englobés dans le corps (2) fait d'un matériau non magnétique et dont les polarités sont orientées et alignées dans une direction dépendant de la forme des faces principales du corps et de la forme des aimants élémentaires (4) eux-mêmes.

2. Dispositif magnétique selon la revendication 1, **caractérisé en ce que** les éléments magnétiques (4) sont disposés dans un espace tridimensionnel de manière discrète et de telle manière que le champ magnétique produit est le résultat du comportement collectif d'une multitude d'aimants élémentaires.

3. Dispositif magnétique selon la revendication 2, **caractérisé en ce que** le champ résultant produit par la structure composite du composant selon l'invention comprend, autour des pôles, un champ magnétique dont les lignes de force, contrairement à un aimant classique, peuvent être déterminées et définies au moyen : de la composition et de la forme des aimants élémentaires (4) ; de la position des aimants élémentaires (4) dans la matrice ; et de la géométrie périphérique du composant composite.

4. Dispositif magnétique selon la revendication 3, **caractérisé en ce que**, à la proximité des pôles, le composant magnétique composite comporte des lignes équipotentielles magnétiques plus orthogonales au sens de magnétisation et plus parallèles l'une avec l'autre par rapport à celles produites par un aimant classique dans les zones correspondantes de manière à donner naissance à une force magnétique qui est plus orientée dans le sens de magnétisation du composant.

5. Dispositif magnétique selon la revendication 3, **caractérisé en ce que** la répartition géométrique des aimants élémentaires (4) ainsi que leur composition et leur forme sont telles que le composant magnétique composite exerce une force d'attraction/de répulsion qui est plus uniforme que celle d'un aimant classique de masse magnétique égale, et présente une répartition prédéterminée de l'intensité du champ magnétique dans l'espace d'intérêt.

6. Dispositif magnétique selon la revendication 3, **caractérisé en ce que** la géométrie globale du composant composite (1), la géométrie des aimants élémentaires (4), la répartition ou l'espacement relatif ou l'orientation des aimants élémentaires (4), et le matériau qui constitue les aimants élémentaires (4) sont choisis de telle sorte que les lignes de force du champ magnétique global sont prédéterminées et commandées en trajet et en intensité.

7. Dispositif magnétique selon la revendication 1, **caractérisé en ce que** les aimants élémentaires (4) sont choisis entre des aimants monocristallins, des microparticules ou des nanoparticules ferromagnétiques à domaine unique, des nanocâbles à matériau unique ou à couches multiples, des molécules ou des complexes de molécules magnétiques, ou des amas magnétiques moléculaires.

8. Dispositif magnétique selon la revendication 7, **caractérisé en ce que** les aimants élémentaires sont des molécules magnétiques dérivées des sels (tcnq = 7,7,8,8-tétracyanoquinodiméthane ; [Fe₂(η-C₅Me₅)₂(µ-SEt)₂(CO)₂]₂[tcnq]₂ et dérivées des sels tcne = tétracyanoéthylène) [Fe₂(η-C₅Me₅)₂(µ-SEt)₂(CO)₂] [tcne].

9. Dispositif magnétique selon la revendication 7, dans lequel les aimants élémentaires sont des molécules magnétiques dérivées du ferracène, manganocène, chromocène, Mn₁₂Ac, V₁₅, Mn₆Rad₆, Fe₈, Fe₁₀, Fe₃₀, etc., dont les propriétés sont dues à la présence, dans la molécule, d'ions magnétiques Mn, Fe, V, etc., couplés conjointement par de fortes interactions d'échange (de l'ordre de 79,6 x 10³ kA/m).

10. Dispositif magnétique selon la revendication 7 dans lequel ledit composant magnétique est du type polymère ou céramique, dans lequel les aimants élémentaires sont des molécules à spin élevé.

11. Dispositif magnétique selon la revendication 7, dans lequel les aimants à moment unique élémentaires, sous forme de microparticules ou de nanoparticules, de nanocâbles ou de molécules complexes ou d'amas moléculaires, présentent une anisotropie magnétique marquée ou une coercivité élevée dans une direction.

12. Dispositif magnétique selon la revendication 11, dans lequel le comportement magnétique de l'agglomérat est le résultat du phénomène de la coopérativité magnétique des aimants élémentaires dans une direction prédéfinie, qui est à son tour définie par l'organisation spatiale des aimants élémentaires eux-mêmes.

13. Dispositif magnétique selon les revendications 1 à 12, dans lequel l'inclusion, selon un ordre spatial préétabli par une fonction analytique, d'aimants élémentaires de taille et de nature chimique différentes, est obtenue au moyen d'une synthèse chimique ou physique ou mécanique ou par électrodéposition dans des matrices poreuses, au moyen d'une sérigraphie ou d'un trempage, ou par rotation, ou par auto-assemblage, ou bien utilisant des techniques du type microélectronique.

14. Dispositif magnétique selon la revendication 1, **caractérisé en ce qu'**il est muni d'un placage (5) le long de sa paroi de périmètre consistant en un matériau ayant une perméabilité magnétique élevée conçu pour confiner et concentrer les lignes de flux magnétique générées par les éléments magnétiques à l'intérieur de celui-ci ou dans un endroit souhaité de l'espace.

15. Dispositif magnétique selon la revendication 14, **caractérisé en ce que** ledit matériau de placage ayant une perméabilité magnétique élevée masque une partie des surfaces polaires du corps du composant magnétique composite.

16. Dispositif magnétique selon la revendication 14, **caractérisé en ce que** ledit matériau ayant une perméabilité magnétique élevée est un matériau ayant une perméabilité non uniforme dans l'espace, par exemple une hétérostructure avec un gradient ou une modulation de la perméabilité magnétique telle qu'un alliage à stoechiométrie variable, qui est tel qu'il permet un contrôle complet des lignes individuelles du champ magnétique et des lignes équipotentielles magnétiques dans tout l'espace tridimensionnel.

17. Dispositif magnétique selon la revendication 14, **caractérisé en ce que** ledit matériau ayant une perméabilité magnétique élevée est une structure à couches multiples faite de matériaux ayant des caractéristiques physiques différentes.

18. Dispositif magnétique selon la revendication 17, **caractérisé en ce qu'**une couche intermédiaire de ladite structure à couches multiples consiste en air.

19. Dispositif magnétique selon la revendication 1, **caractérisé en ce que** le matériau non magnétique constituant le corps (2) a un poids spécifique inférieur à celui du matériau des éléments magnétiques (4).

20. Dispositif magnétique selon la revendication 1, **caractérisé en ce que** les éléments magnétiques (4) sont disposés dans une matrice ou dans une quelconque géométrie réticulaire de façon ordonnée ayant une période quelconque (de quelques nanomètres à quelques millimètres).

21. Dispositif magnétique selon la revendication 19, **caractérisé en ce que** le matériau non magnétique est un matériau synthétique.

22. Dispositif magnétique selon la revendication 21, **caractérisé en ce que** le matériau non magnétique est un matériau polymère.

23. Dispositif magnétique selon la revendication 19, **caractérisé en ce que** le matériau non magnétique est choisi parmi l'aluminium, le cuivre, l'or, un matériau diélectrique, un matériau poreux ayant une porosité hétérogène ou une porosité ordonnée, une céramique, un composite, un matériau élastique ou en général un matériau choisi pour des propriétés physiques particulières telles que, par exemple, la conductivité thermique et électrique.

24. Dispositif magnétique selon la revendication 1, **caractérisé en ce que** les aimants élémentaires individuels (4) du même composant ont des propriétés magnétiques (courbes B-H) différentes de l'un à l'autre, dans la mesure où lesdits aimants élémentaires (4) ont des formes différentes et/ou sont faits de matériaux ayant des propriétés magnétiques différentes, la possibilité de répartir de manière régulière les aimants élémentaires ayant des propriétés magnétiques différentes apportant ainsi un niveau supplémentaire de liberté pour prédéterminer les propriétés magnétiques du composite résultant et pour accélérer les cycles de magnétisation et remagnétisation et les rendre plus efficace d'un point de vue énergétique.

25. Dispositif selon la revendication 1, **caractérisé en ce que** la répartition régulière des aimants élémentaires (4) peut être du type ayant une structure périodique ou une structure dans laquelle les aimants élémentaires (4) sont disposés dans le corps de la matrice (2) selon des fonctions analytiques prédéfinies.

26. Dispositif magnétique selon la revendication 25, **caractérisé en ce que** le composant composite est d'un type bistable, c'est-à-dire conçu pour conserver en permanence sa polarité dans une direction ou dans l'autre à la suite de l'excitation d'une bobine, de préférence une bobine supraconductrice, associée à celui-ci avec le passage du courant dans une direction ou dans l'autre, les aimants élémentaires (qu'ils soient mous ou durs, sous forme de nanoparticules ou d'amas moléculaires à domaine unique ou domaine multiple) étant disposés, dans le champ qui est généré par la bobine et est réparti uniformément dans tout le composite, en fonction de coordonnées spatiales avec l'orientation de telle sorte que l'inversion du courant dans la bobine induit l'inversion simultanée de la polarité dans tous les aimants élémentaires (4) de la matrice (2).

27. Dispositif magnétique selon la revendication 1, **caractérisé en ce que** les éléments magnétiques sont engagés avec faculté de coulissement sur un rail fabriqué sur la surface interne du guide (6).

28. Dispositif magnétique selon la revendication 27, **caractérisé en ce que** le guide est un élément tubulaire ou un simple câble ou une tige ou un ensemble de tiges d'éléments coulissants.

29. Dispositif magnétique selon la revendication 1, **caractérisé en ce qu'**il comprend seulement deux composants magnétiques, dont seulement un est bistable.

30. Dispositif magnétique selon la revendication 27, **caractérisé en ce qu'**il comprend au moins trois composants magnétiques.

31. Dispositif magnétique selon la revendication 30, **caractérisé en ce qu'**il comprend trois composants magnétiques dont celui qui est en position intermédiaire est bistable, de préférence avec une magnétisation rémanente élevée, les deux autres composants terminaux étant rigidement raccordés l'un à l'autre, avec possibilité de mouvement par rapport au composant bistable intermédiaire, ledit composant bistable intermédiaire étant fixé en position ou pouvant être serré temporairement en position, et les polarités des deux composants terminaux magnétiques étant opposées l'une à l'autre de sorte que, à la suite de l'excitation des moyens de bobine associés au composant intermédiaire, ce dernier attire l'un des deux composants terminaux et repousse l'autre, l'inversion de la polarité du composant intermédiaire conférant ainsi un mouvement de va-et-vient linéaire au système des composants terminaux raccordés l'un à l'autre.

32. Dispositif magnétique selon la revendication 1, **caractérisé en ce qu'**il constitue un dispositif actionneur du type à répulsion-attraction, dans lequel un composant magnétique est installé à l'extrémité de la série de composants magnétiques et est raccordé de manière opérationnelle à un élément d'entraînement.

33. Dispositif magnétique selon la revendication 1, **caractérisé en ce que** les moyens d'enroulement ou de bobine mentionnés précédemment comprennent des enroulements qui sont disposés autour des parties du guide tubulaire (6) qui sont traversées lors du fonctionnement par les composants magnétiques bistables, ou bien d'autres sont disposés le long de la totalité du guide tubulaire (6).

34. Dispositif magnétique selon la revendication 1, **caractérisé en ce que** les moyens d'enroulement ou de bobine mentionnés précédemment comprennent des enroulements qui sont montés sur chaque composant magnétique bistable à l'intérieur du guide (6).

35. Dispositif magnétique selon la revendication 34, **caractérisé en ce que** chaque enroulement est alimenté au moyen d'une batterie portée par le composant magnétique bistable.

36. Dispositif magnétique selon la revendication 34, **caractérisé en ce que** chaque enroulement est alimenté au moyen de contacts coulissants qui coopèrent avec deux trajets électriques formés à l'intérieur du guide tubulaire (6).

37. Dispositif magnétique selon la revendication 35, **caractérisé en ce qu'**il comprend une unité pour la génération ou la conversion d'énergie et une unité sans fil pour la communication avec le monde extérieur.

38. Dispositif magnétique selon la revendication 1, **caractérisé en ce qu'**il comprend une pluralité de composants magnétiques bistables indépendants installés de manière adjacente les uns aux autres ou les uns sur les autres, chacun étant équipé de son propre enroulement, et formant un élément unique à étages multiples, qui, en fonction des courants appliqués aux enroulements individuels, peut être configuré dans une multitude niveaux d'intensité du champ généré dans l'une des deux polarités.

39. Dispositif magnétique selon la revendication 1, **caractérisé en ce que** le corps non magnétique d'un ou de plusieurs des composants magnétiques composites est fabriqué d'un matériau élastique et, en conséquence, compressible et expansible, ledit élément étant doté à l'intérieur d'une unité de serrage qui peut se déployer de manière radiale pour serrer le composant magnétique composite dans une position définie par rapport au guide (6).

40. Dispositif magnétique selon la revendication 39, **caractérisé en ce qu'**il comprend des moyens pour commander l'activation de l'unité de serrage associée à un ou plusieurs composants magnétiques, pour serrer de manière appropriée le premier puis l'autre composant, ou des paires (ou une quelconque multiplicité) des composants, dans le but de déplacer la totalité de la chaîne de composants le long du guide (6).

41. Dispositif magnétique selon la revendication 39, **caractérisé en ce que** chaque unité de serrage est formée par une paire, ou par une quelconque multiplicité de sous-éléments magnétiques (mous et durs) qui forment une mâchoire pouvant s'ouvrir (serrage par expansion) et se fermer (composant libre de se déplacer) sur commande, ladite unité de serrage pouvant être intégrée à la fois dans les composants avec une polarité permanente et dans les composants bistables et en général dans un ou plusieurs composants de la chaîne.

42. Dispositif magnétique selon la revendication 41, **caractérisé en ce que** chaque sous-élément fait d'un matériau magnétique bistable constituant l'unité de serrage est équipé d'une bobine fixée à celui-ci qui peut magnétiser dans un sens ou dans l'autre le sous-élément auquel il est couplé.

43. Dispositif magnétique selon la revendication 41, **caractérisé en ce que** le sous-élément magnétique est équipé d'une batterie pour une auto-alimentation de la bobine, et de préférence également d'une unité pour générer ou convertir l'énergie, et d'un port sans fil pour une communication à distance.

44. Dispositif magnétique selon la revendication 41, **caractérisé en ce que**, dans une configuration d'un actionneur pas à pas, dans la condition de repos, les sous-éléments de l'unité de serrage sont en position de serrage, et, au moment de l'application du courant dans les enroulements respectifs, ils se déplacent vers la position de libération.

45. Dispositif magnétique selon la revendication 41, **caractérisé en ce que**, dans une configuration d'actionneur à ressort ou une configuration du type suspension à absorption de choc, dans la condition de repos, les sous-éléments de l'unité de serrage sont dans la position de libération et, au moment de l'application du courant dans les enroulements respectifs, ils se déplacent vers la position de serrage.

46. Dispositif magnétique selon la revendication 41, **caractérisé en ce que** des écarteurs polymères élastiques ou des écarteurs en plastique, ou des écarteurs en métal non magnétique conçus pour éviter un contact direct des composants, sont insérés entre les composants magnétiques mobiles.

47. Dispositif magnétique selon la revendication 32, **caractérisé en ce que** le composant magnétique du dispositif de répulsion-attraction installé au niveau de l'extrémité opposée à celle de l'élément entraîné est assujetti à une structure fixe.

48. Compresseur, **caractérisé en ce qu'**il comprend un dispositif selon la revendication 32.

49. Dispositif magnétique selon la revendication 1, **caractérisé en ce que** les composants magnétiques sont mobiles à l'intérieur d'un fluide ou d'un lubrifiant.

50. Dispositif magnétique selon la revendication 1, **caractérisé en ce qu'**il est équipé de moyens de commande destinés à être utilisés de manière inverse, dans le but de récupérer l'énergie à l'intérieur d'une bobine installée autour du guide tubulaire (6) à la suite d'un mouvement d'un composant magnétique à l'intérieur de celui-ci.

51. Dispositif magnétique selon la revendication 27 ou la revendication 1, **caractérisé en ce qu'**il est arrangé au préalable pour être utilisé comme un capteur de position au moyen de la coopération des composants magnétiques mobiles avec une bande magnétique de référence.

52. Dispositif magnétique comprenant deux ou trois éléments selon la revendication 40, **caractérisé en ce qu'**il est équipé de moyens de commande destinés à faire avancer la chaîne de composants magnétiques par étapes discrètes le long d'un trajet d'une longueur définie par le guide (6) au moyen d'activations et de désactivations successives des moyens de serrage associés à un ou plusieurs des composants.

53. Dispositif comprenant deux ou trois éléments selon la revendication 40, **caractérisé en ce qu'**il constitue un moteur-actionneur magnétique pas à pas pour un ascenseur ou un élévateur.

54. Utilisation d'un dispositif selon la revendication 1 dans des valves destinées à la régulation du débit d'un fluide, ledit dispositif comprenant deux ou trois desdits composants magnétiques.

55. Utilisation d'un dispositif selon la revendication 1 dans des déviateurs de fluide, ledit dispositif comprenant deux ou trois desdits composants magnétiques.

56. Utilisation d'un dispositif selon la revendication 1 dans des sélecteurs ou des mélangeurs de fluide, ledit dispositif comprenant deux ou trois desdits composants magnétiques.

57. Dispositif magnétique selon la revendication 31, **caractérisé en ce que** les aimants composites sont formés par une succession d'une multiplicité de couches ferromagnétiques ou antiferromagnétique en FeMn, IrMn couplées au moyen d'une interaction d'un échange entre couches, de telle sorte qu'une première couche ayant une coercivité élevée et une magnétisation à saturation basse force la magnétisation d'une seconde couche adjacente ayant une faible coercivité et une saturation élevée dans une direction souhaitée, le matériau composite ainsi obtenu ayant un produit énergétique élevé, ce qui signifie une saturation élevée et en même temps une coercivité élevée.

58. Dispositif magnétique selon la revendication 57, **caractérisé en ce qu'**il est fabriqué entièrement avec des aimants (volume massif) classiques, ou bien à la fois avec des aimants (volume massif) classiques et avec des composants magnétiques composites, un ou plusieurs de ces derniers étant éventuellement du type désigné ci-dessus, avec des couches interactives.
